# FASCICULE DE BREVET EUROPEEN

(11) **EP 1 430 439 B1**
(45) Date de publication et mention de la délivrance du brevet: **12.08.2009**
(21) Numéro de dépôt: 02783205.4
(22) Date de dépôt: 24.09.2002
(51) Int. Cl.: G06K 9/00

(54) **PROCEDE ET FICHE DE TRAITEMENT ANONYME D'UN ELEMENT MATERIEL, MACHINE ET ETIQUETTE POUR LES METTRE EN OEUVRE**
VERFAHREN UND KARTEI ZUR ANONYMEN VERARBEITUNG VON MATERIELLEN ELEMENTEN UND VORRICHTUNG UND ETIKETT ZUM AUSFFÜHREN DES VERFAHRENS
METHOD FOR ANONYMOUS COMPUTERIZED PROCESSING OF DOCUMENTS OR OBJECTS

(30) Priorité: 24.09.2001 FR 0112294
(43) Date de publication de la demande: 23.06.2004
(73) Titulaire: Societe Neoptec Techniques S.A.R.L., 34000 Montpellier (FR)
(72) Inventeur: MOUSSETTE, Jean-Pierre, 2, Résidence Beauséjour, F-34090 Montpellier (FR)
(74) Mandataire: Ravina, Bernard
(86) Numéro de dépôt international: PCT/FR2002/003261
(87) Numéro de publication internationale: WO 2003/027939

(56) Documents cités:
- US-A- 4 460 824
- US-A- 4 978 305
- US-A- 5 743 567

## Description

La présente invention concerne un procédé et une fiche de traitement anonyme d'un élément matériel, une machine et une étiquette pour les mettre en oeuvre dans des modes particuliers. Elle s'applique notamment au traitement des feuilles d'examen afin que la notation ne puisse être influencée par la connaissance de l'identité de leur auteur.

Le problème de rendre anonymes des documents ou des données matérielles appartenant à une personne ou une institution ou tout élément ayant un lien avec une identification concerne de nombreuses activités : examens, concours de recrutement, enquêtes de différents types notamment médicales, tests de tout genre. Ces activités mettent en jeu souvent des conflits d'intérêt ou le respect de la vie privée. Pour traiter de notre solution technique nous donnerons en exemple le cas des examens de type éducation, mais dans tous les cas nécessitant, durant une phase intermédiaire, le traitement anonyme de données sensibles, les principes et les techniques sont identiques.

Le problème auquel sont confrontés les institutions, universités, établissements publics ou privés, réalisant des examens ou des concours, est d'assurer aux candidats un anonymat leur garantissant l'impartialité de leur notation.

Le problème est double :
1) Il faut que le correcteur ne puisse en aucun cas reconnaître un candidat en raison de l'identification de la copie fournie par l'organisme gestionnaire (nous n'avons pas pour objectif d'empêcher la reconnaissance de l'écriture par le correcteur, c'est un problème différent et marginal) : cas d'un correcteur pouvant défavoriser un candidat.
2) Il ne faut pas que le candidat puisse transmettre des éléments d'identification de sa copie au correcteur : cas d'un correcteur pouvant favoriser un candidat.

Les procédés actuellement utilisés sont tous basés sur des modalités manuelles :
- coin gommé repliable, cachant l'identité manuscrite du candidat,
- indexation double a posteriori des copies : un numéro sur la partie identifiée par le candidat, le même numéro sur la copie elle-même, avec massicotage de la partie identifiée,
- attribution d'un code à barres indépendant, personnel à chaque candidat, à coller sur la copie..., voir par exemple US 4978 305 et US 4460824.

Ces procédés sont particulièrement lourds à mettre en oeuvre et rencontrent des problèmes de gestion humaine, tant en quantité qu'en qualité, au niveau du contrôle des protocoles de sécurité de ces procédés, car ils exigent un temps considérable tout en étant faciles à contourner.

De plus ces procédés s'ajoutent aux lourdes procédures de contrôle et de suivi normal d'un examen, et exigent donc une quantité de main d'oeuvre responsable et qualifiée difficilement compatible avec les contraintes actuelles, car ils génèrent des files d'attente à certains moments telles qu'il est bien souvent impossible de respecter les procédures de sécurité prévues. D'une façon générale, beaucoup de personnes détiennent ou peuvent aisément détenir avec ces procédés, durant un laps de temps non nul, des informations sur l'appartenance des données en ayant la possibilité d'influer sur le résultat.

Ces procédés ne règlent que très imparfaitement le problème du traitement de l'anonymat des copies sans permettre :
- de garantir un respect de sa bonne exécution,
- de gérer plus globalement les épreuves, ou
- de saisir informatiquement le ou surtout plusieurs résultats indépendants pour une même donnée (double correction) pour une gestion performante.

La présente invention vise à remédier à ces inconvénients.

A cet effet, la présente invention vise, selon un premier aspect, un procédé de traitement anonyme et informatisé d'un document ou d'un élément matériel, ci-après dénommés "élément matériel", dont l'auteur ou propriétaire, ci-après dénommés "auteur", doit rester inconnu durant le traitement de l'élément matériel, comme défini en revendication 1.

Grâce à ces dispositions, tous les volets auteurs peuvent être aisément isolés pendant l'étape de traitement, par exemple une phase de correction des épreuves, et la mise en correspondance des résultats de traitement et des identifications des auteurs est très rapide tout en n'étant réalisée que par une seule personne responsable.

Selon l'invention, le premier code auteur est unique et différent de chaque deuxième code, également unique.

Grâce à ces dispositions, le risque de communication est diminué.

Selon l'invention, la relation entre le premier code et chaque deuxième code est générée par un algorithme informatique non prédictible qui met en oeuvre une variable aléatoire et en ce que la valeur de ladite variable et/ou une table de mise en correspondance des codes sont mémorisées.

Selon des caractéristiques particulières, la relation entre le premier code et chaque deuxième code est générée par un algorithme informatique non prédictible qui met en oeuvre une variable représentative d'un type de contenu de l'élément matériel et en ce que la valeur de ladite variable et/ou une table de mise en correspondance des codes sont mémorisées.

Selon des caractéristiques particulières, au moins un volet administration constitue l'élément matériel.

Selon des caractéristiques particulières, au cours de l'étape de traitement, on traite des informations portées par l'auteur sur le volet administration et on fournit au moins un résultat sous forme d'au moins une valeur ou note.

Grâce à chacune de ces dispositions, on peut traiter de manière anonyme un questionnaire à choix multiple ou tout formulaire médical personnel intégré au volet administration.

Selon des caractéristiques particulières, le support d'information unique comporte un talon d'identification comportant l'un des codes, ledit talon restant lié à l'élément matériel de manière durable.

Grâce à ces dispositions, même si tous les volets, auteur et administration, ont été détachés, on peut assurer la traçabitité de l'épreuve grâce à l'association de manière durable du talon, qui porte l'un des codes et de l'élément matériel.

Selon des caractéristiques particulières, le procédé tel que succinctement exposé ci-dessus comporte une étape d'inscription d'au moins un résultat de l'étape de traitement sur au moins un volet administration et une étape de séparation d'au moins un volet administration de l'élément matériel, avant l'étape de lecture dudit volet administration.

Grâce à ces dispositions, le ou les correcteurs peuvent rendre les notes en fournissant les volets administration qui les concernent, ces notes pouvant être lues lors du processus, renforçant l'intérêt de notre procédé en apportant une double solution aux problèmes de l'anonymat et de la saisie fiable et automatique des notes.

Selon des caractéristiques particulières, le procédé tel que succinctement exposé ci-dessus comporte une étape de masquage d'au moins un des codes au moins jusqu'à l'étape de séparation du volet auteur.

Grâce à ces dispositions, chaque code masqué est protégé contre toute divulgation rendant totalement impossible la connaissance de l'identité de l'auteur avant la procédure de levée de l'anonymat.

Selon des caractéristiques particulières, le support d'information unique comporte plusieurs volets administration détachables portant le même deuxième code unique et un code supplémentaire définissant le numéro du volet. Grâce à ces dispositions, plusieurs correcteurs peuvent corriger successivement l'élément matériel et sans connaître les résultats portés par les autres correcteurs rendant ainsi effectif le principe de double correction.

Selon des caractéristiques particulières :
- au moins l'un des codes est intégré dans une grille de valeurs alphanumériques comportant au moins un symbole alphanumérique par case, les éléments du code ayant une place prédéfinie dans la grille, et/ou
- au moins l'un des codes correspond à des signes graphiques intégrés dans une grille de signes graphiques dont les éléments correspondant au code ont une place prédéterminée dans la grille.

Grâce à chacune de ces dispositions, le code est très difficile à retrouver si on ne connaît pas les places prédéterminées dans la grille, cette place pouvant dépendre d'un codage spécial d'une case.

Selon un deuxième aspect, la présente invention vise une machine comme définie en revendication 22.

Grâce à ces dispositions, même si un deuxième code est connu, la correspondance avec le code index reste inconnue et toute tricherie est impossible.

Selon un troisième aspect, la présente invention vise une fiche pour traitement anonyme d'un élément matériel, comme définie en revendication 23

D'autres avantages, buts et caractéristiques de l'invention ressortiront dé la description qui va suivre faite en regard des dessins annexés dans lesquels :
- la figure 1 représente une fiche d'inscription à une épreuve,
- la figure 2 représente une liste de présence mise en oeuvre dans un mode de réalisation du procédé objet de la présente invention,
- la figure 3 représente une fiche conforme à un mode de réalisation particulier de la présente invention,
- la figure 4 représente un exemple de volet auteur d'une fiche conforme à un mode de réalisation particulier de la présente invention,
- la figure 5 représente un exemple de volet auteur d'une fiche conforme à un autre mode de réalisation particulier de la présente invention,
- la figure 6 représente un exemple de volet auteur d'une fiche conforme à un autre mode de réalisation particulier de la présente invention,
- la figure 7 représente un exemple de liste de notation conforme à un mode de réalisation particulier de la présente invention,
- la figure 8 représente un exemple de liste de notation conforme à un autre mode de réalisation particulier de la présente invention,
- la figure 9 représente un exemple de volet administration intégrant une fiche de QCM conforme à un mode de réalisation de la présente invention,
- les figures 10 et 11 représentent des systèmes de codage mis en oeuvre dans des modes de réalisation particuliers de la présente invention,
- la figure 12 représente une machine à indexer conforme à un mode de réalisation de la présente invention,
- la figure 13 représente une vue de détail de la machine illustrée en figure 12,
- la figure 14 représente une autre vue de détail de la machine illustrée en figures 12 et 13,
- la figure 15 représente une autre vue de détail de la machine illustrée en figures 12 à 14,
- la figure 16 représente des codes graphiques mis en oeuvre dans des modes de réalisation particuliers de la présente invention
- les figures 17 A et 17 B représentent un organigramme d'un procédé conforme à un mode de réalisation particulier de la présente invention,
- les figures 18 et 19 représentent des types d'étiquettes conformes à un mode de réalisation particulier de la présente invention.

Avant de décrire ces figures, on donne ci-dessous des explications générales.

Le procédé objet de la présente invention regroupe, dans un mode de réalisation préférentiel, un ensemble de modalités axées sur le traitement informatique par lecture scanner de données manuscrites qui, globalement, réduisent considérablement le temps nécessaire à la gestion d'un examen tout en apportant une sécurité de l'anonymat impossible à contourner. En effet une seule personne suffit pour détenir la clé de l'anonymat, cette clé pouvant être différente pour chaque épreuve, son utilisation étant instantanée et pouvant être garantie par un dépôt sécurisé. Le procédé objet de la présente invention présente en outre, dans certaines variantes, la possibilité d'un traitement manuel de secours qui évite toute inquiétude sur la fiabilité tout en permettant un suivi totalement anonyme par toute personne même peu qualifiée en informatique.

Le procédé objet de la présente invention combine, dans un mode de réalisation préférentiel, la lecture informatisée par scanner :
- de l'écriture manuscrite et imprimée alphanumérique,
- de cases à cocher, d'échelles, de codes barres standard 1610 ou spécifiques 1620, 1630,
- de codes alphanumériques ou graphiques à lecture optique pouvant être lus sans appareil, et/ou
- de codes 1640, 1650, 1650, détaillés dans la demande de Brevet N°FR 95 10 803 (incorporé ici par référence).

On donne, ci-dessous une description du procédé appliqué à une gestion d'examen dans toutes ses phases particulières.

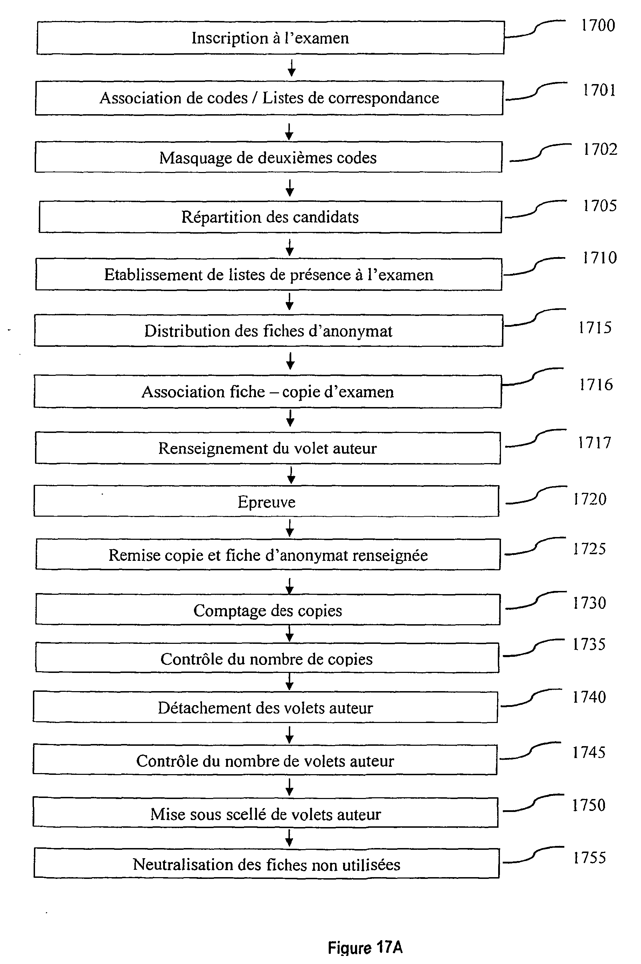

### 1) L'inscription aux examens, étape 1700 en figure 17 A.

Chaque candidat est identifié par ses Nom(s), Prénom(s), date de naissance, adresse, numéro d'identification, en tout ou partie, ces éléments devant être saisis informatiquement, directement ou à partir d'une base existante (par exemple inscription à l'université).

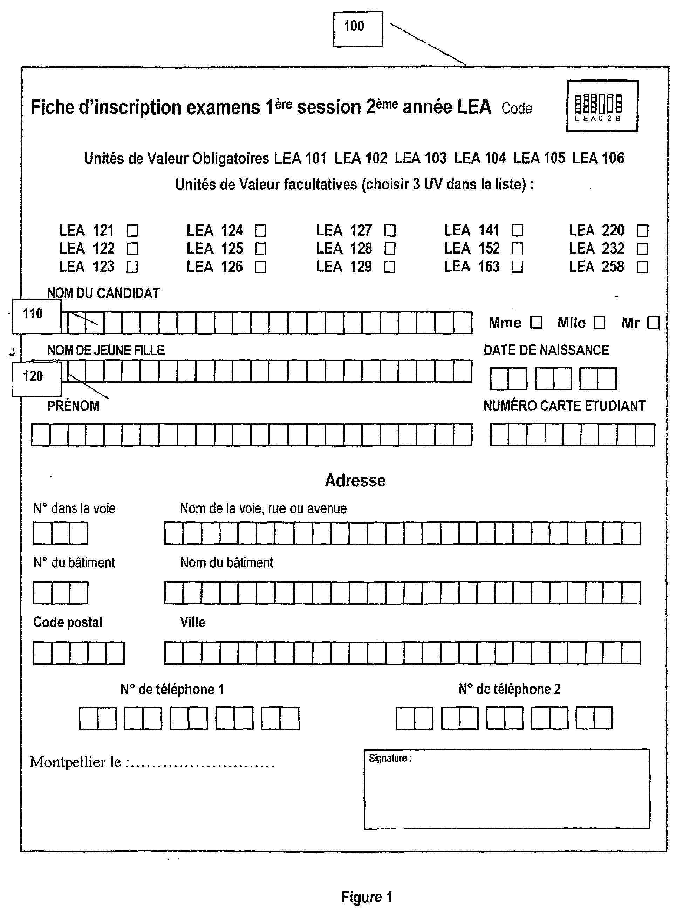

Dans des modes particuliers de réalisation, la présente invention met en oeuvre une fiche individuelle illustrée en figure 1 garantissant l'acte juridique d'inscription. Cette fiche individuelle 100 comportant des cadres pour inscriptions manuscrites 110, des libellés 120 et, une fois renseignée, des annotations manuscrites (non représentées), est lue par scanner et définit chaque cohorte d'inscriptions par épreuve. L'inscription par fiche juridiquement fiable peut être associée à une inscription en ligne Internet ou Intranet donnant au candidat, par la suite, accès à toutes les informations sur son examen : horaire, salle, modalités, confirmation de la validité de son inscription et éventuels problèmes.

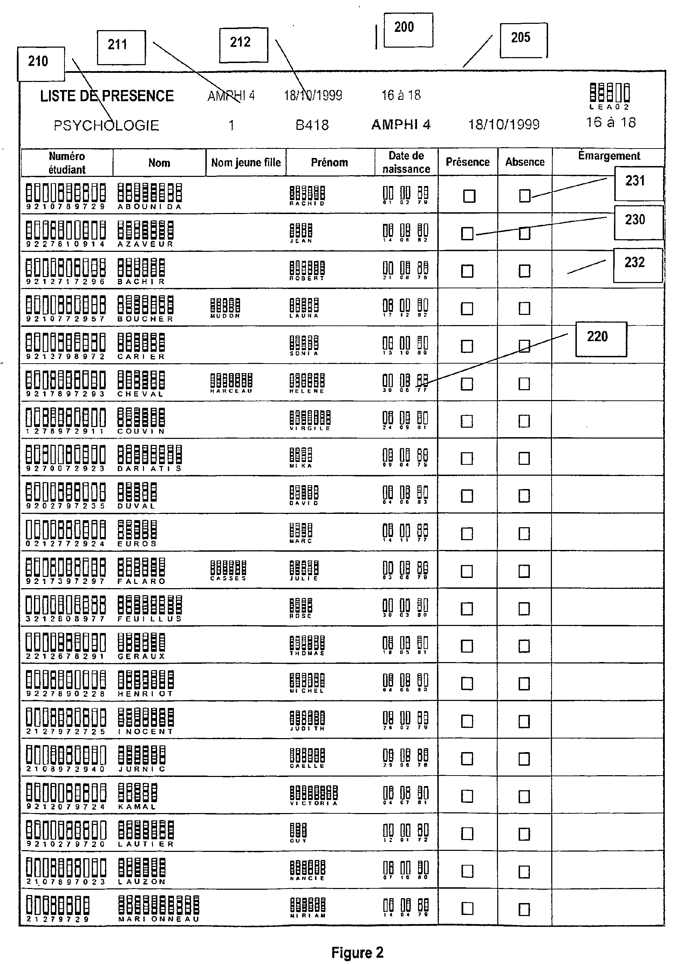

A partir des inscriptions ainsi définies par épreuve, le service des examens répartit les candidats par centre d'examen et par salle, et établit des listes de présence 200, illustrées en figure 2, par centre et par salle, et ce automatiquement, en fonction de critères prédéterminés : disponibilité des salles, capacité de chaque salle par rapport aux conditions d'examen. Dans le mode particulier de réalisation illustré en figure 2, la liste de présence 200 comporte un cadre 205 dans lequel sont inscrites les références de l'examen, 210 de la salle d'examen, 211 et de la date, 212, et pour chaque candidat, des indications d'identification numéros, noms, prénoms et dates de naissance 220 sous forme de caractères imprimés et/ou de codes à barres, une case à cocher 230 pour indiquer la présence du candidat, une case à cocher 231 pour indiquer l'absence du candidat et un cadre d'émargement 232.

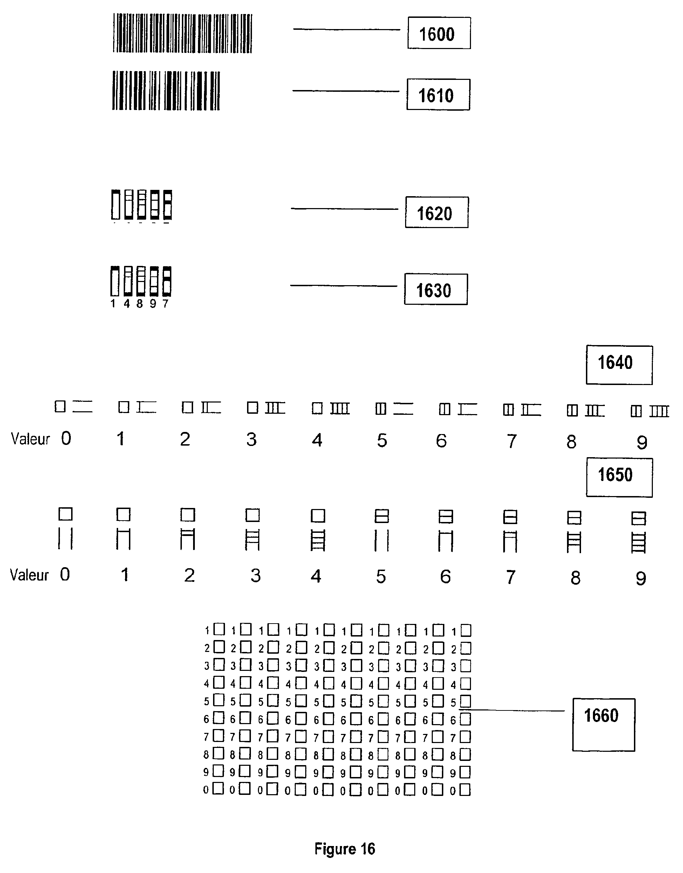

La liste de présence 200 sert de liste d'appel des présents et le cas échéant, de liste d'émargement. Cette liste est prévue pour être lue automatiquement afin d'établir la présence effective des inscrits, étape 1710. Afin de faciliter leur lecture, les données (nom, prénom, ..) peuvent se présenter sous forme de codes barres explicites (non représentés) standards de type 1600, 1610 ou de codes explicites de type 1630, comme illustrés en figure 16.

### 2) La fiche d'anonymat

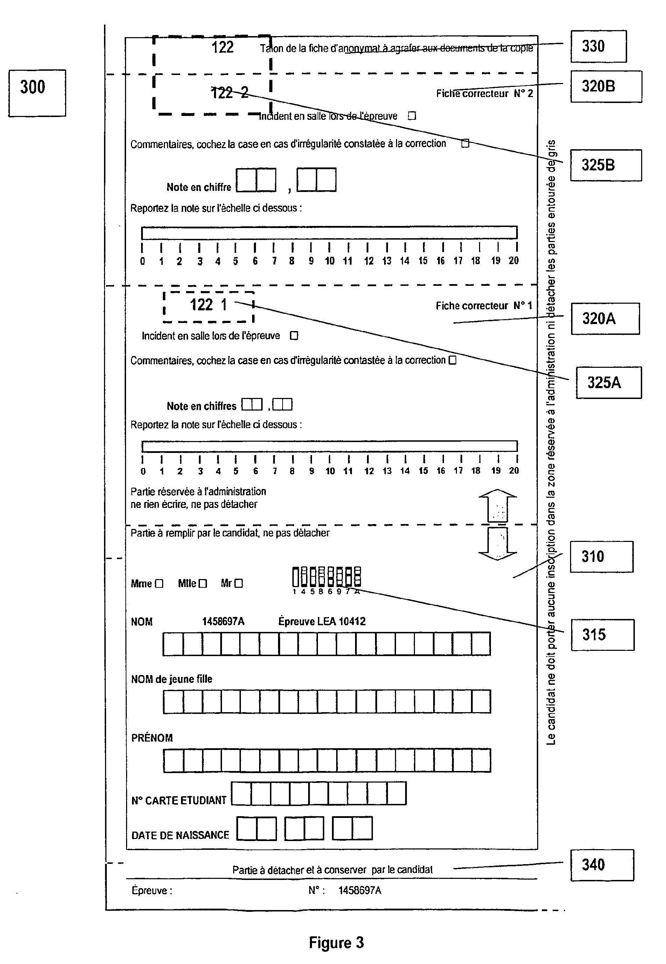

Afin d'éviter toute préparation individuelle des copies ou de planches d'étiquettes générant de nombreuses difficultés et la nécessité de mesures de secours et de sécurité toujours aléatoires, le support d'information unique ou "fiche" 300 illustrée en figure 3, conforme à la présente invention est jointe ou intégrée aux copies, cette fiche est indépendante des candidats et peut donc être distribuée à n'importe quel candidat, étape 1715.

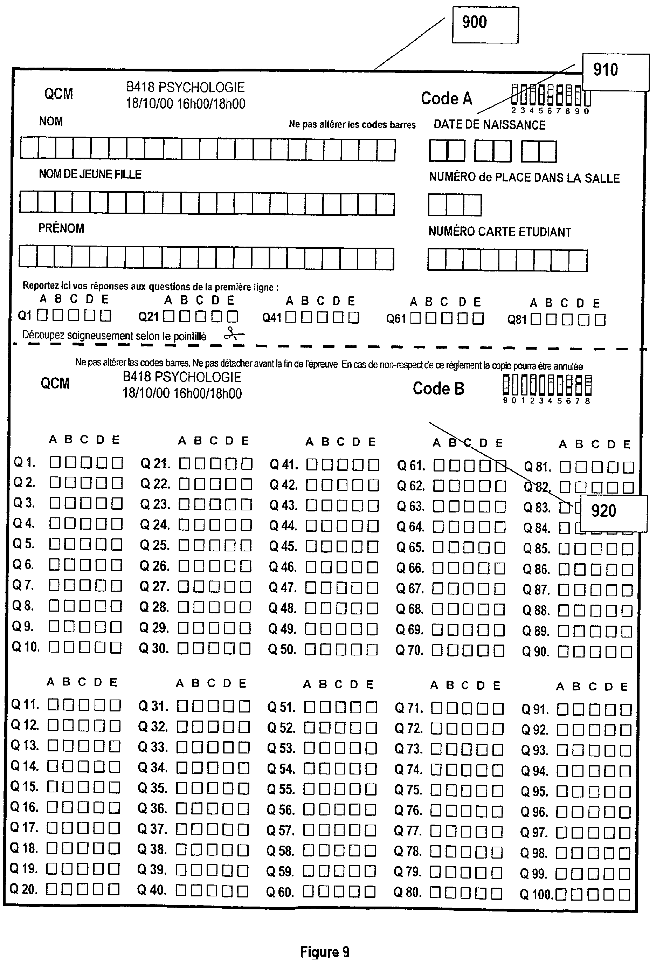

Le procédé objet de la présente invention possède deux variantes :
a - la mise en oeuvre d'une fiche 300 indépendante de la copie puis associée (par exemple agrafée ou collée), étape 1716, par son talon 330 à la copie d'un candidat avec un, ou éventuellement plusieurs, volet détachable dit "administration" 320a, 320b, et un volet détachable dit "auteur" 310, comportant le cas échéant une partie à conserver par le candidat 340.
b - l'intégration de la copie dans le support d'information unique ou "fiche" 900 illustré en figure 9, avec un, ou éventuellement deux, volets détachables dit "administration" 920, un volet détachable dit "auteur" 910, le cas échéant une partie à conserver par le candidat (non représentée), et une zone destinée à être renseignée par le candidat au cours de l'épreuve (questionnaire, questionnaire à choix multiple, rédaction libre, par exemple). Cette zone est dans le mode de réalisation illustré en figure 9, confondue avec le volet administration 920.

Les fiches 300 comportent :
- le volet auteur 310, comportant un code 315 dit "premier" code ou "code A",
- un ou plusieurs volet administration 320A, 320B (pour les cas de corrections doubles ou multiples), comportant un code 325A, 325B, dit "deuxième" code ou "code B" propre à chaque volet administration, intégré(s) à la copie, soit relié à un talon 330,
- éventuellement, la partie 340 à conserver par le candidat, portant le premier code.

Dans le mode de réalisation illustré en figure 3, le premier code est un code au format standard alphanumérique, simple et lisible. Cette identification du volet auteur est unique, et ne peut être donnée deux fois dans le cadre du même examen.

Chaque volet de la fiche 300 porte un code lisible par lecture par scanner. Deux variantes du procédé sont proposées. Elles reposent chacune sur l'utilisation de deux codes, A et B, dont le lien est impossible à établir (ou non prédictible).

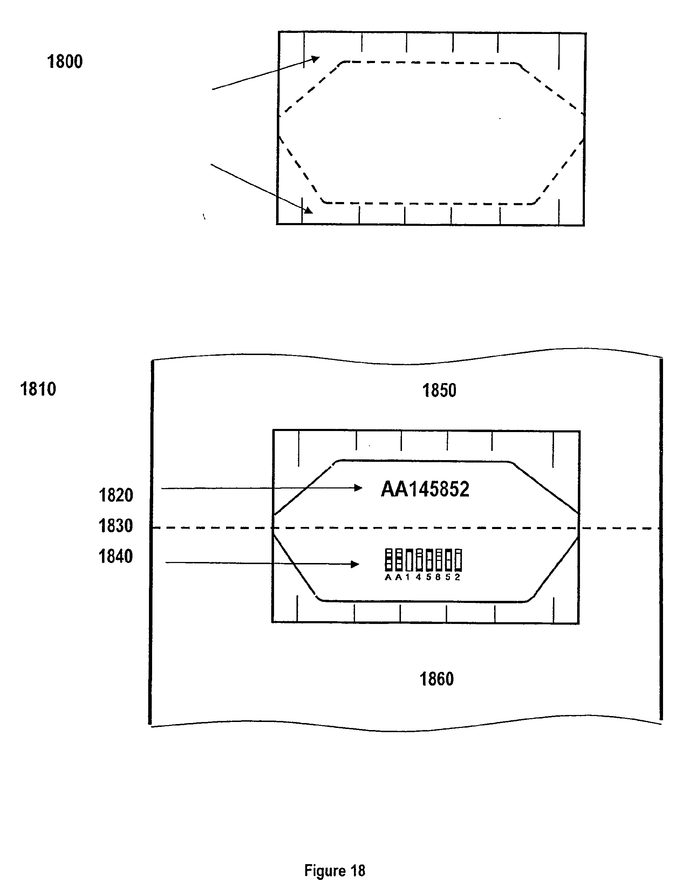

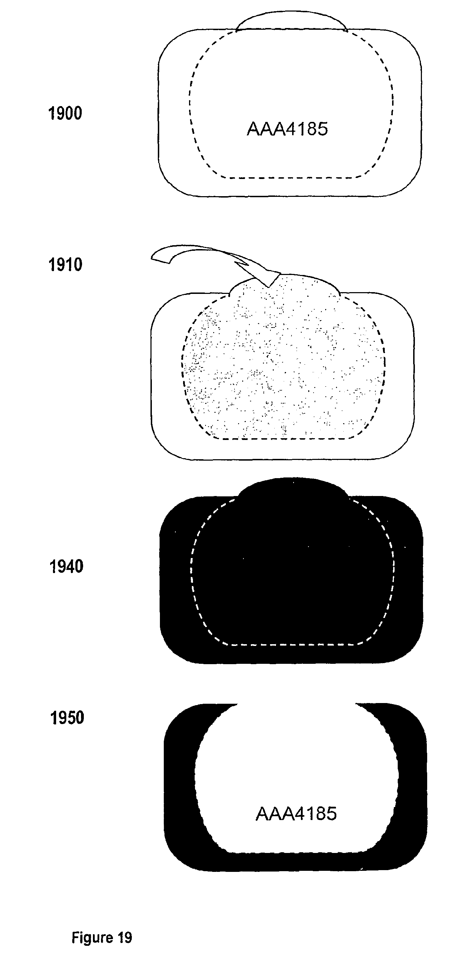

Selon la première variante, le ou les deuxième(s) code(s) sont masqués : Cette variante repose sur :
- Un premier code A, alphanumérique simple, imprimé sur le volet auteur,
- Un deuxième code B, alphanumérique simple, différent du premier code, imprimé sur chaque volet administration. Ce deuxième code est masqué par sérigraphie grattable avec couche de vernissage de sécurité pouvant être colorée ou tout autre procédé de masquage du type des étiquettes 1800, 1900, des figures 18 et 19, détachable une seule fois (non recollable, ou non repositionnable), de manière à ce que tout essai de grattage ou de démasquage conduise immanquablement à la détection visuelle de la tentative de fraude par le candidat.

Selon la seconde variante, le deuxième code n'est pas masqué : Cette variante repose sur :
- Un premier code A, alphanumérique simple, imprimé sur le volet auteur, rappelé, le cas échéant, sur la partie 340 à conserver par le candidat,
- Un deuxième code B, non masqué mais sous forme de codes cryptés ou de codes barres non explicites de type 39, 128 ou autres standards, ou de codes barres de type de ceux de la figure 16 1620, à lecture scanner imprimés sur chaque volet réservé à l'administration et/ou au(x) correcteur(s).

Le principe général de la relation entre le premier code et le deuxième code est que, dans le mode de réalisation illustré en figure 3, le premier code est de lecture simple, alphanumérique. Ceci permet la gestion aisée des documents vierges avant l'épreuve : stockage, attribution par épreuve, par salle et gestion de l'épreuve en salle. Les numéros du premier code se suivent, facilitant l'affectation des fiches et leur dénombrement. Ce code ne doit pas comporter de doublons possibles à l'intérieur d'une même administration gérant des examens, lors d'une même session et pour une même épreuve.

Ce premier code n'apparaissant que sur le volet auteur, sa connaissance ne permet en aucun cas de connaître son affectation à un candidat puisque celle-ci se fait au hasard dans la salle.

Lors de l'impression du premier code, le deuxième code est imprimé simultanément.

Le deuxième code est différent du premier code et est associé au premier code A selon une règle connue du seul concepteur du logiciel du système de numérotation. Cette association est le produit d'un tirage aléatoire pouvant être combiné à un traitement algorithme dans la série de nombres des copies imprimées (une variante moins élaborée peut lier par seul traitement algorithme les codes A et B).

Ainsi, supposons que nous imprimions 2000 copies commençant au n° 1250081 et finissant au n° 1252080, l'affectation par tirage au sort pourrait donner :

| **CODE A** | | **CODE B** |
|---|---|---|
| 1 250 081 | tirage au sort | 1 252 004 |
| 1 250 082 | tirage au sort | 1 251 608 |
| 1 250 083 | tirage au sort | 1 250 152 |
| 1 250 084 | tirage au sort | 1 251 493 |
| 1 250 085 | tirage au sort | 1 250 741 |
| .... | | |

Les symboles alphanumériques, ici les chiffres des deuxièmes codes sont masqués dès leur impression ou indéchiffrables par lecture directe. Lorsque les volets auteur, portant le premier code, sont détachés des fiches 300, les volets administration et correcteur deviennent impossibles à réassocier au code A sans disposition du fichier informatique de correspondance.

La copie étant standard, toute erreur ou malfaçon exceptionnelle peut être immédiatement corrigée par la distribution d'une autre fiche 300 ou d'une autre copie.

On comprend que les caractéristiques de la présente invention garantissent une inviolabilité de la correspondance des codes par absence de lien entre le premier code et le deuxième code. Dans de nombreux cas, il est possible de se satisfaire d'un système de correspondance par un algorithme de codage plus ou moins élaboré tenu secret et détenu par le seul responsable de l'anonymat. Un logiciel simple protégé par mot de passe sert dans ce cas de « traducteur » entre le premier code et le deuxième code. Il est souhaitable que l'algorithme de correspondance soit réservé à des séries limitées de données à rendre anonymes et soit différent de série à série. Cette possibilité de correspondance par un algorithme entre le premier code A et le deuxième code B définit une variante moins élaborée de notre procédé.

Dans des modes particuliers de réalisation, les premiers et seconds codes sont identiques. Dans ce cas si aucun code n'est caché le correcteur ne peut connaître le code de l'auteur puisque le volet auteur comportant l'identification manuscrite de l'auteur est détaché, la seule possibilité de fraude étant la communication par l'auteur de son code au correcteur ; si le second code administration est caché le correcteur ne peut connaître le code de l'auteur même si l'auteur lui communique son code, mais un intervenant administratif pourrait établir la relation auteur-résultat avant la levée de l'anonymat.

Ces diverses modalités constituent donc un mode particulier de réalisation du procédé objet de la présente invention

L'examen se déroule comme suit :

### Début de l'examen, étape 1710

Les surveillants gèrent, au début de l'épreuve, les présences à partir d'une liste de présence 200 en pointant dans une case les présents. Cette liste peut servir de liste d'émargement grâce à une zone 340 de paraphe du candidat.

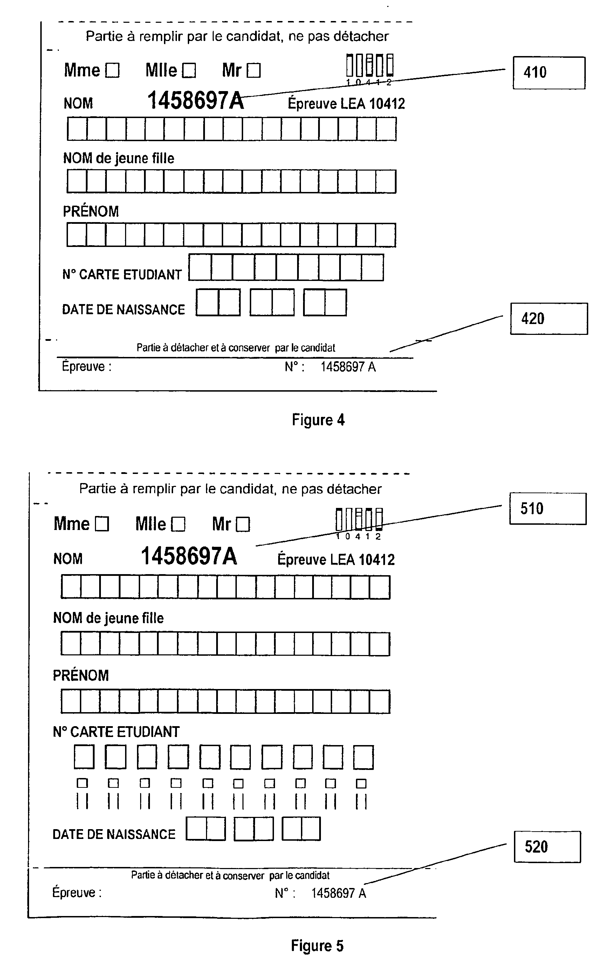

Les surveillants distribuent les copies intégrées dans les fiches conformes à la présente invention ou des copies neutres et des fiches 300, au début de l'épreuve, étape 1715. La distribution doit évidemment se faire dans un ordre différent de l'ordre des places et, si possible, au hasard par lots variables. Les candidats remplissent le volet auteur dont des exemples sont illustrés en figures Figures 4 à 6 sans porter la moindre annotation sur les autres parties.

L'épreuve se déroule, étape 1720. Si un candidat possède une fiche 300 défectueuse ou déchirée ou s'il commet une erreur de remplissage, sa fiche 300 est échangée contre une autre.

### Fin de l'examen en salle

A la fin de l'examen, les candidats remettent leurs copies et les fiches 300 qui sont agrafées ou collées à l'ensemble des copies rendues par chaque candidat, étape 1725.

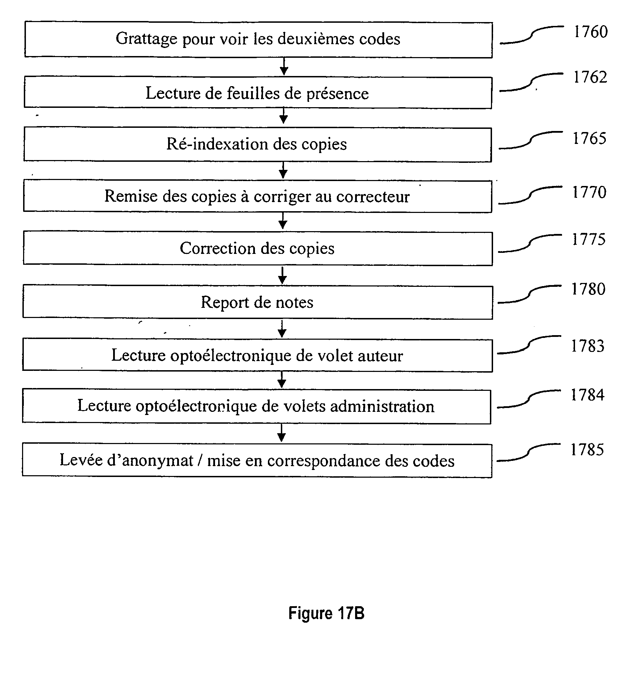

Les surveillants comptent les copies, étape 1730, et après contrôle de la correspondance entre le nombre des présents et le nombre des copies, étape 1735, ils procèdent en deux temps :
- au cours de l'étape 1740, les surveillants détachent les volets auteur (Figures 4, 5, 6) par arrachement/déchirure, grâce à un système de micro perforation, puis, après contrôle du nombre des volets auteur, ceux-ci sont scellés dans une enveloppe spéciale "volets auteurs", étape 1750, avec identification du lot : épreuve, date, heure, nombre de fiches du numero X au numero Y. Les fiches 300 ou les copies contenant les volets auteurs non distribuées ou échangées, sont isolées et remises à l'administration et sont neutralisées, étape 1755.
- si le deuxième code est masqué, l'administration procède ensuite au grattage de la sérigraphie, au moyen d'un gratteur lame de rasoir, ou au décollage des masquages, étape 1715, figure 17B, opérations qui prennent moins de deux secondes par copie.

La figure 18 illustre le cas d'une étiquettes de masquage 1800 adaptées au masquage de deux codes 1820 et 1840 et pour permettre un démasquage automatique lors de la séparation de deux volets ou d'un volet et du talon 1850 et 1860 le long d'une ligne de détachement 1840.

La figure 19 illustre le cas d'une étiquette de masquage 1900, 1940 adaptée au masquage d'un ou plusieurs codes situés sur un même volet, une partie non adhésive peut être aisément arrachée, 1910, en démasquant le ou les codes 1950.

Les copies sont distribuées par l'administration au(x) correcteur(s), étape 1770 (l'opération de démasquage peut être réalisée par les correcteurs ou par l'administration, après notation)

Afin de faciliter les procédures de suivi manuel en cas d'erreur de manipulation, il est recommandé d'indexer manuellement dans certains cas les volets administration - correcteur, par un numéro d'ordre, de la copie numéro 1 à la dernière copie (le volet auteur devant être détaché et les copies mélangées afin que l'index manuel n'ait aucun rapport avec le premier code A).

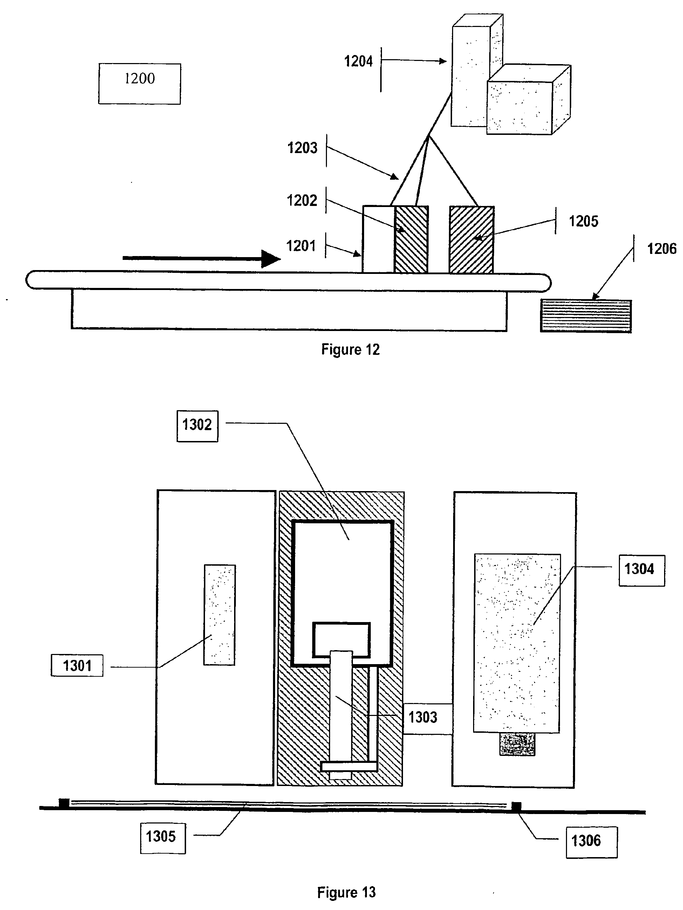

Cette méthode juxtapose le code crypté et un index pour faciliter la gestion, cette juxtaposition peut être réalisée automatiquement par la machine à indexer illustrée aux figures 12 à 15, étape 1765.

Chaque copie de l'épreuve est ainsi identifiée par un deuxième code, numéro aléatoire par rapport à la distribution des premiers codes ou numéros des candidats, numéros compris entre deux limites : par exemple entre le n° 1250081 et le n° 1252080. Cette suite et sa correspondance avec les numéros candidats sont disponibles dans un fichier sécurisé en possession du seul responsable des examens. Cette suite peut ne pas être continue à l'origine, mais elle sera forcément discontinue à l'arrivée, puisque la quantité de feuilles à prévoir est supérieure au nombre d'inscrits (pour incidents divers) et a fortiori des présents.

La correction se déroule selon les méthodes habituelles, le correcteur devant se conformer au règlement pour les éventuelles annotations, étape 1775. Le problème qui se pose est celui du report du résultat du traitement par le ou les analystes ou correcteurs. Dans le cas d'un examen le résultat se présente sous forme de note ou de points. Plusieurs analystes ou correcteurs peuvent intervenir sur la totalité de la copie ou sur un aspect partiel physique : deuxième partie par exemple, ou qualitatif : qualité rédactionnelle.

Le procédé objet de la présente invention permet plusieurs modes de report des résultats appropriés aux modalités de correction qu'il autorise de manière originale, étape 1780. Le mode de report est tributaire de la nature du deuxième code.

Le report du résultat avec fiche détachable par un premier correcteur, illustrée en figure 3, permet indifféremment l'usage d'un deuxième code B masqué ou non masqué. La note attribuée par le premier correcteur est reportée sur un premier volet correcteur par le premier correcteur, ce premier volet correcteur est détaché par le premier correcteur, puis après contrôle du nombre des premiers volets correcteurs, ceux-ci sont scellés dans une enveloppe spéciale "premier correcteur", avec identification du lot : épreuve, date, heure, nom du correcteur, nombre de fiches du numéro X au numéro Y.

S'il est prévu une deuxième correction, le deuxième correcteur procède comme le premier correcteur. La deuxième note est reportée sur un deuxième volet correcteur par le deuxième correcteur, ce deuxième volet correcteur est détaché par le deuxième correcteur puis, après contrôle du nombre de deuxièmes volets correcteurs, ceux-ci sont scellés dans une enveloppe spéciale "deuxième correcteur", avec identification du lot : épreuve, date, heure, nom du correcteur, nombre de fiches du numéro X au numéro Y.

Une liste et un rapport peuvent être prévus subsidiairement permettant à chaque correcteur de confirmer sa note et d'établir un bref compte rendu par copie.

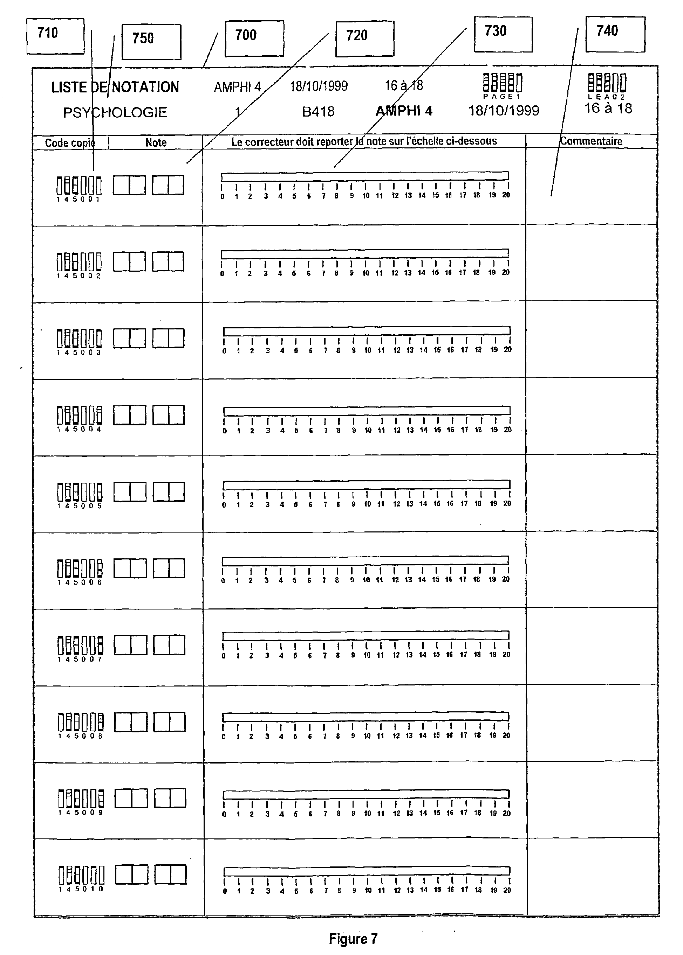

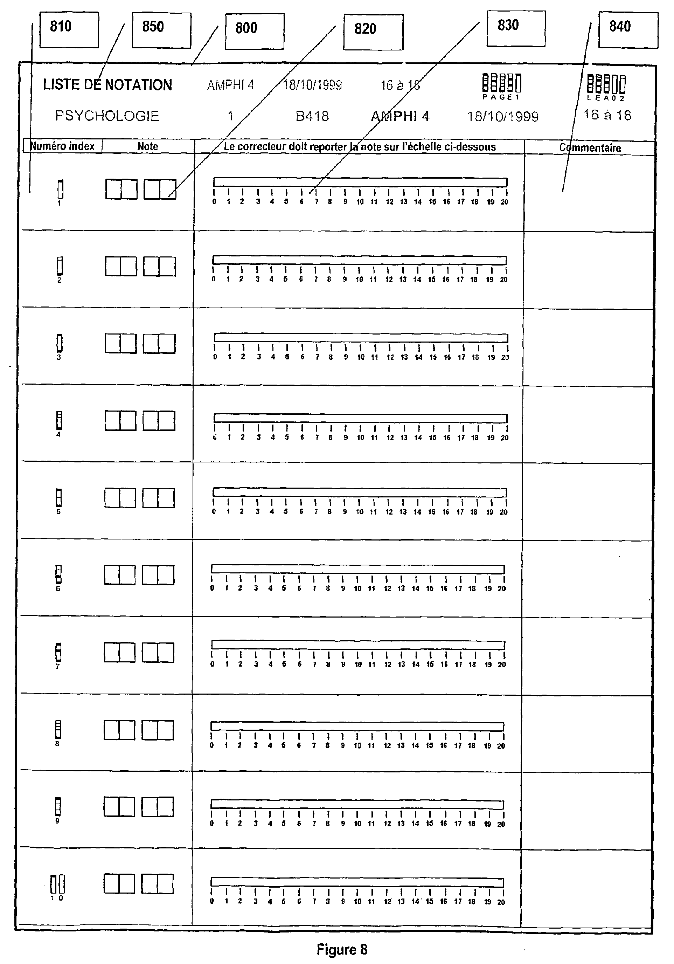

Dans le cas d'un report du résultat sur liste et rapport de correction, cette liste peut constituer une variante aux volets correcteur. Dans ce cas le volet administration de la fiche d'anonymat 300 ne contient pas de volet correcteur mais seulement un talon administration. La liste de correction est établie de la manière suivante :
1) dans le cas d'utilisation d'un deuxième code B masqué, l'administration connaît a priori les codes qui sont distribués dans une épreuve et démasqués après l'épreuve, sans connaître leur attribution aux auteurs puisque celle-ci se fait au hasard au début de l'épreuve. Il suffit donc de dresser informatiquement et préalablement à l'épreuve une liste avec ces deuxièmes codes dans l'ordre. Le correcteur disposant des copies avec le talon portant le deuxième code B démasqué reporte la note sur ce talon et pour les copies dont il a le deuxième code, sur la liste de notation pour report de notes 700 illustrée en figure 7. Les lignes de deuxièmes codes des copies ou fiches d'anonymat non distribuées ou échangées restent vides. Le correcteur veille à ce qu'il ait autant de notes que de copies confiées comme il doit le faire dans la procédure classique de correction.
   La liste 700 prévue pour être lue par lecture par scanner comporte obligatoirement les deuxièmes codes B prévus à la distribution. Le nombre de fiches d'anonymat distribuées et donc de deuxièmes codes B est obligatoirement supérieur au nombre de copies corrigées car il y a des fiches supplémentaires prévues pour les incidents ou les absents. Pour chaque copie, la liste 700 comporte un code de copie 710, des zones d'inscription manuscrite de note 720, un bargraph 730 à compléter pour représenter la note attribuée, une zone de commentaire 740 et une zone de titre 750 dans laquelle est indiquée l'épreuve concernée.
2) dans le cas d'utilisation d'un deuxième code B non masqué, le deuxième code B est illisible sans système de reconnaissance. Les talons administration des copies de chaque épreuve sont numérotés manuellement de 1 à X (nombre de présents). Un volet comportant le deuxième code B et ce numéro d'ordre est détaché puis lu par scanner pour produire un fichier intermédiaire mettant en correspondance les deuxièmes codes et des index.
   Cette numérotation peut être réalisée automatiquement par une machine illustrée en figures 12 à 15, imprimant ou étiquetant de 1 à X (nombre de présents) chaque copie après lecture du deuxième code B en produisant un fichier de rapprochement.
   Si le deuxième code B est un code à barres, une lecture unique ordonnée des talons du lot peut également générer automatiquement un fichier informatique avec impression de la liste après disposition des copies à la fin de l'examen. Dans ce cas la liste ne comprend que les copies distribuées à chaque correcteur. Un fichier de correspondance entre les deuxièmes codes et les index est réalisé pour l'épreuve et, le cas échéant, par correcteur ou groupe de correcteurs.
   Le correcteur reporte sur la liste de notation pour report de notes 800 illustrée en figure 8, dans l'ordre de numérotation imprimé, la note obtenue. Cette variante est appropriée en cas de corrections multiples. Un processus de rapprochement est alors nécessaire (voir infra). La liste de notation 800 comporte une zone de titre 850, qui indique l'épreuve concernée, et pour chaque copie, un index 810, des zones 820, d'inscription manuscrite de la note attribuée à la copie, un bargraph 830 sur lequel le correcteur peut indiquer, de manière graphique, la note attribuée et une zone 840 de commentaires.

Dans le cas d'un report du résultat avec saisie manuelle informatique directe de la note portée sur le talon, le correcteur reporte le résultat sur le talon administration. Il y a alors saisie, au clavier, des notes portées sur les talon, la saisie des notes se faisant en les attribuant à un numéro et non au nom du candidat (ce qui évite toute erreur à la saisie ou toute « intervention » entre la saisie et la levée de l'anonymat, opération qui prend plusieurs jours dans une université).

Le procédé objet de la présente invention ne nécessite qu'une personne et quelques secondes pour lever l'anonymat et passer en mode sécurisé le fichier résultat, étape 1785. Selon le type de deuxième code B, masqué ou non masqué, l'opération est différente :
- dans le cas d'un report du résultat avec saisie directe de la note portée sur le talon avec deuxième code B masqué, la saisie est simple. La liste informatique des codes démasqués est affichée par un logiciel de type tableur ou base de donnée, la saisie des notes se fait sur cette base ;
- dans le cas d'un report du résultat avec saisie directe de la note portée sur le talon avec deuxième code non masqué, si le résultat est unique ou multiple sans interférence jugée négative entre les correcteurs, la saisie est réalisée par un ou deux opérateurs.

- si le deuxième code B est un code à barres imprimé sur le talon, le deuxième code est décrypté par pistolet lecteur de codes à barres, la lecture du deuxième code sous forme de code à barres peut déclencher la recherche du deuxième code dans la liste, et la saisie de chaque note est simple et effectuée par une seule personne ,
- si le deuxième code B est un code grille alphanumérique ou un code grille graphique (voir infra), la lecture est faite au moyen d'un masque de lecture et la saisie de chaque note est opérée manuellement ou automatiquement en fonction de la connaissance de la position de chaque élément du deuxième code dans la grille.

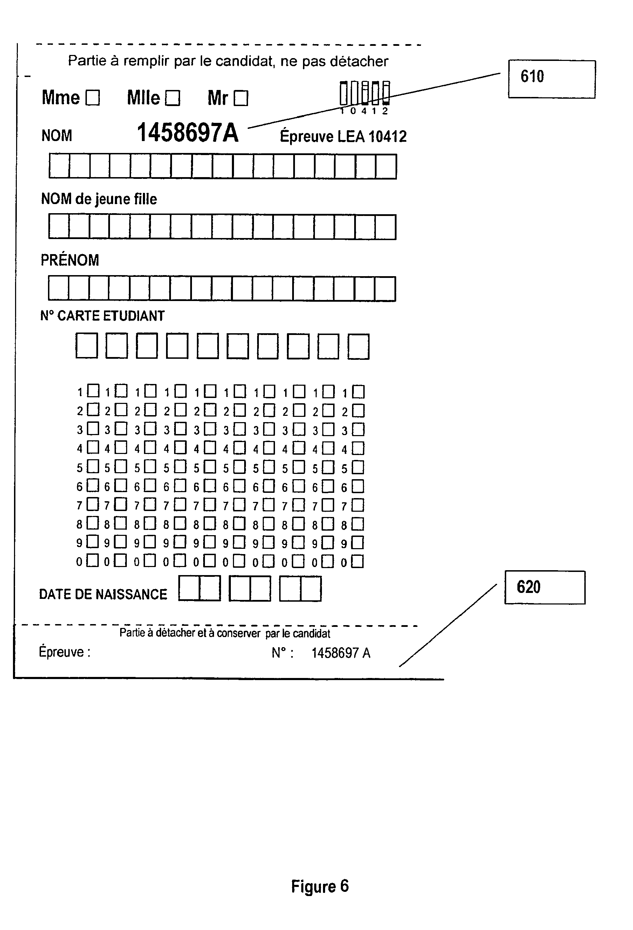

Les opérations de "création" d'anonymat et de levée d'anonymat impliquent un ensemble d'opérations de dissociation et d'association successives.
1. Association, lors de la production de la fiche d'anonymat 300, étape 1701, du premier code A et du deuxième code B, avec création d'un fichier de correspondance sécurisé entre ces codes. Ce fichier de correspondance est divisé par commodité et par sécurité en lots en nombre défini, par exemple par lots de cinquante fiches, les cinquante numéros du premier code A ordonnés correspondant à cinquante numéros du deuxième code B. La division en lots est effectuée à partir d'un ensemble de fiches d'anonymat 300, par exemple dix mille, correspondant à un système de concordance unique des premiers et deuxièmes codes. Un algorithme de chiffrement à partir d'une base de données aléatoires relie les codes en utilisant des chiffrements propriétaires dans les limites de 128 bits autorisées légalement.
2. Définition d'une épreuve et de la quantité de fiches d'anonymat 300 nécessaires. Chaque épreuve se voit attribuer un nombre de lots de fiches 300 permettant de distribuer au moins une fiche 300 par participant, ces lots appartenant au même ensemble.
3. Après distribution des fiches d'anonymat 300, le volet auteur portant le premier code A est renseigné par le candidat, étape 1717 : identification manuscrite, nom, prénom, date de naissance, ...ou identification par un code propre au candidat, sous forme de codes conformes à l'invention exposée dans la demande de brevet FR 95 10 803 et illustré en figures 6 et 16, ou pavé de case à cocher illustré en figures 6 et 16. Le volet administration portant le deuxième code B est laissé vierge par le candidat.
4. A la fin de l'épreuve, si la fiche 300 n'est pas intégré à la copie, elle lui est associée, par exemple par collage ou agrafage. Après décompte des copies et vérification de la correspondance avec le nombre de présents, l'administration procède au détachement du volet auteur portant le premier code A, d'une part, de l'élément matériel, ici la copie, associé ou intégré avec chaque volet administration portant le deuxième code B, et, éventuellement, le talon portant le deuxième code B, le deuxième code B étant masqué ou crypté.

Cette phase de détachement des parties, étape 1740 nécessite le respect absolu des consignes de sécurité d'anonymat : intégrité du masque, absence de lecture inopinée avec moyen de décryptage du deuxième code B.
1. Le démasquage du deuxième code B ou son décryptage n'est pas nécessairement réalisé après le détachement du volet auteur et avant la correction de la copie. Un deuxième code B explicite facilite la gestion des données mais celle ci peut parfaitement se réaliser avec un code masqué ou non décrypté.
2. La distribution des copies aux correcteurs, corrections, analyse et association d'un ou de plusieurs résultats (sous le forme d'une valeur ou note) à un élément matériel, ici une copie, étape 1775. Le procédé objet de la présente invention couvre un ensemble de possibilités de reports de résultats : uniques, multiples, indépendants, globaux ou partiels, étape 1780.

L'association de résultat(s) à une copie peut se faire de différentes manières. La plus simple consiste à porter sur la fiche d'anonymat 300, ou sur un volet détachable de cette fiche 300, le résultat selon une procédure établie, sous forme lisible par scanner, en principe sous forme manuscrite, de codes décrits dans la demande de brevet FR 95 10 803, figure 16, 1640, 1650, 1660, d'échelles ou de pavés de cases à cocher. La seconde manière consiste à associer aux différentes copies une ou plusieurs listes prédéfinies de résultats dont le nombre de résultats correspond au nombre de fiches d'anonymat 300 contenues dans les lots de copies attribué à l'épreuve. Le premier code A porté sur ces listes peut prendre différentes formes. selon les cas, il est constitué :
1. du deuxième code B, s'il est démasqué,
2. d'un index supplémentaire porté, soit manuellement sur les fiches d'anonymat 300 (deuxième code B restant masqué ou deuxième code B crypté), soit automatiquement (deuxième code B crypté) avec constitution d'un fichier établissant la correspondance entre les deuxièmes codes B et les index (voir infra système d'indexation automatique).

Les listes, réalisées avant l'épreuve, comportent un nombre de possibilités de résultats égal au nombre de fiches d'anonymat 300 prévues pour l'épreuve, indexées de 1 à X (nombre de fiches prévues).
1. Remise des résultats et mise sous forme de fichier informatique numérique de ces résultats. Selon le procédé de report choisi les résultats font l'objet soit d'une saisie informatique directe soit d'une lecture des différents volets des fiches d'anonymat 300, soit d'une lecture des listes de résultats. Selon le cas, chaque copie fera l'objet d'un ou plusieurs résultats de nature différente, qui pourront faire l'objet du traitement informatique souhaité : addition, comparaison, traitement d'alertes, moyenne, statistiques de toutes sortes.
   A ce stade l'ensemble des données restent parfaitement anonymes.
2. La levée de l'anonymat. Celle-ci peut se faire pour toute la cohorte concernée ou pour seulement une partie de celle-ci, pour tous les résultats, pour une partie des résultats ou pour un seul résultat, ces résultats pouvant faire l'objet d'un traitement intermédiaire.

Si l'association des résultats aux deuxièmes codes B a fait l'objet d'une indexation complémentaire, on procède par l'intermédiaire du fichier de correspondance entre les deuxièmes codes B et les index, à l'association de ceux ci aux deuxièmes codes B.

Enfin sous le contrôle, du responsable détenant le fichier sécurisé de correspondance entre les premiers codes A et les deuxièmes codes B des lots concernés par l'épreuve, est effectuée la mise en correspondance partielle ou totale entre les identités des participants et leurs résultats ou notes, étape 1785.

Ce système peut être adapté à toute autre forme de contrôle permettant de généraliser l'automatisation de la gestion des données pédagogiques en utilisant les moyens de saisie par scanner : contrôle par questionnaire à choix multiples (Q.C.M.), contrôle oral :
- Le contrôle par Q.C.M. met en oeuvre une fiche de Q.C.M. telle que celle illustrée en figure 9. Dans ce cas, la fiche 900 est composée d'un volet auteur 910, et d'un volet administration 920, renseigné directement par le candidat. Le code B ou deuxième code peut être crypté ou masqué par une étiquette simple du type illustre par la figure 19
- Dans le cas du contrôle oral, les fiches de notation sont établies. Dans ce cas, bien évidemment, il n'y a pas d'anonymat, mais il y a saisie automatique des fiches de notation enseignants.

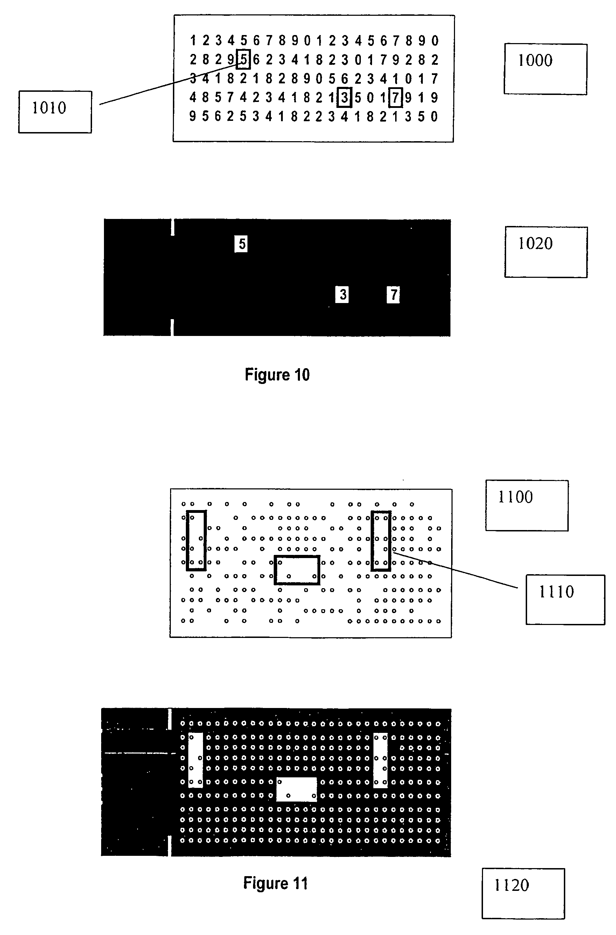

Pour une gestion complète de l'anonymat selon notre procédé, il faut donc réaliser les opérations suivantes, certaines étant optionnelles :
1) Production de fiches d'inscriptions illustrées en figure 1, lecture des fiches avec un logiciel possédant des moteurs de lecture par scanner d'écriture manuscrite (Reconnaissance Optique de Caractères ou OCR pour Optical. Character Recognition), de caractères imprimés, de codes barres standards ou de codes décrits dans la demande de Brevet FR 95 10 803, de codes cryptés illustrés en figures 10 et 11, de cases à cocher et d'échelles graphiques (cette phase est optionnelle).
2) Production de listes de présence illustrée en figure 2, par référence à la liste des inscriptions par épreuve, avec éventuellement répartition par salle (cette phase est optionnelle).
3) Production des fiches d'anonymat 300, avec création d'un fichier informatique sécurisé de correspondance entre les premiers codes A et les deuxièmes codes B.
4) Production des listes de notation illustrées en figures 7 et 8, si la fiche d'anonymat ne comporte pas de volet correcteur, ou production d'une fiche de compte-rendu des corrections, chacune de ces fiches étant destinée à un correcteur prédéterminé avant l'examen (cette phase est optionnelle).

Toutes ces opérations peuvent être réalisées bien avant l'examen, sans générer de "goulot d'étranglement", puisque la mise en place de ces éléments peut être prédéterminée et réalisée avant l'examen. Seules les impressions sont préférentiellement réalisées dans les semaines précédant l'examen avec des procédés modernes extrêmement simples. La réalisation des copies elle-même peut être faite indépendamment des fiches d'anonymat, elles peuvent être réalisées industriellement et stockées.

### Opération de gestion de la lecture :

Dès la fin de la première épreuve, les fiches de présence émargées illustrées en figure 2 sont adressées au service informatique qui les lit automatiquement et établit un premier fichier par épreuve. Les volets auteurs illustrés aux figures 4, 5 et 6 sont lus immédiatement afin de contrôler l'émargement et de déterminer les valeurs des premiers codes A des candidats présents, en vue de permettre ultérieurement la levée de l'anonymat des résultats.

Ce système permet bien avant la disposition du résultat de pré-gérer la levée de l'anonymat. Avant donc le début des corrections, sans utiliser de main d'oeuvre exceptionnelle, le système est prêt à saisir les notes et à lever l'anonymat automatiquement.

Au cours d'une étape 1783, les volets auteurs sont lus pour associer une identification de candidat à chaque premier code et cette association est mémorisée.

Ensuite, au fur et à mesure que les correcteurs complètent leurs volets correcteurs ou leurs fiches de notation globale, ceux-ci sont lues, les notes attribuées et les résultats immédiatement disponibles après le rendu de la dernière lecture, et l'anonymat peut être automatiquement levé sous le contrôle d'un seul responsable disposant du fichier de levée de l'anonymat, étape 1785, par l'intermédiaire des premiers et deuxièmes codes, et mise en correspondance de l'identification du candidat avec chaque note qui lui a été attribuée.

Ce système permet instantanément de disposer d'un pré-projet de procès-verbal de Jury, s'il y a définition préalable du coefficient de chaque note et attribution des différentes épreuves à un jury. Les statistiques des résultats sont immédiatement disponibles afin de permettre au Jury de définir son éventuelle politique de rattrapage. De plus, l'ensemble des notes par correcteur pouvant être comparées entre correcteurs, des possibilités d'ajustement entre correcteurs peuvent être décidées selon des critères propres au Jury. Sans nécessiter aucune main d'oeuvre complémentaire, le système proposé rend parfaitement anonyme un examen avec une rapidité et une fiabilité d'exécution totale et sans précédent.

Ceci permet à l'ensemble des agents, notamment les enseignants, de se consacrer entièrement à leurs tâches pédagogiques et d'évaluation, en les dégageant de tâches et manipulations administratives lourdes.

Dans le cas des deuxièmes codes B non masqués, ceux-ci doivent rester inconnus des candidats pour qu'ils ne puissent le communiquer à des correcteurs ou que les correcteurs ne puissent reconnaître facilement ce code. Un besoin contradictoire réside dans le fait que la gestion des volets administration doit pouvoir être assurée aisément en pouvant se référer à un code lisible et éditable. L'utilisation d'un code à barres aisément décryptable par styto lecteur portatif est possible mais présente de ce fait des problèmes de sécurité évoqués et résolus par ailleurs. Pour éviter toute possibilité de décryptage deux variantes de systèmes de codage alphanumérique ou graphique sont proposées.

La figure 10 illustre le principe des codes grilles alphanumériques, 1000. Le premier code A est associé à un deuxième code B masqué ou crypté. Ce code B crypté est donc identique au code B masqué mais n'est pas directement lisible visuellement. Pour permettre une lecture directe et par scanner, on maintient le format du code en symboles alphanumériques, chiffres et lettres usuels, mais ces symboles sont "noyés" dans un ensemble d'autres symboles alphanumériques, comme illustré en figure 10. Le code est intégré dans une grille de symboles alphanumériques 1000 (un seul chiffre ou une seule lettre par case), tous les éléments qui n'appartiennent pas au deuxième code B pouvant varier au hasard. Les éléments de code possèdent une place fixe 1010 dans la grille afin de permettre :
- une lecture directe aisée du deuxième code par l'intermédiaire d'un masque spécifique 1020 disposant de trous indexés pour chaque élément du code, ce masque est spécifique à un ensemble de fiches d'anonymat et est confié à une personne responsable.
- une lecture par scanner des seules cases de la grille correspondant au deuxième code.

Dans le cas de la lecture par scanner, au moins une des valeurs alphanumériques qui n'appartiennent pas au deuxième code peut faire partie d'un code de contrôle de la valeur du deuxième code B lu.

Dans le cas des codes grilles graphiques 1100 cryptés illustrés en figure 11, le deuxième code B crypté est toujours identique au code B mais le code ne se présente pas sous forme de chiffres et lettres usuels, mais au contraire, sous la forme de signes graphiques noyés dans un ensemble d'autres signes graphiques, un seul type ou plusieurs types pouvant être utilisés conjointement, un seul étant « valable ». Le deuxième code B est intégré dans une grille de signes graphiques 1100 possédant, au plus, un seul signe graphique par case, pouvant varier au hasard pour chaque case à l'exception des valeurs des zones réservées à la représentation du deuxième code B. Les valeurs représentant le deuxième code B se retrouvent dans des zones prédéterminées 1110 de la grille afin de permettre:
- une lecture directe aisée du deuxième code par l'intermédiaire d'un masque spécifique 1120 disposant de trous indexés pour chaque élément du code, ce masque est spécifique à un ensemble de fiches d'anonymat et est confié à une personne responsable.
- une lecture par scanner des seules zones de la grille correspondant au code. Dans le cas de la lecture par scanner, les signes graphiques contenus dans au moins une des zones de distraction (c'est-à-dire n'appartenant pas au code) peuvent représenter un code de contrôle de la valeur du deuxième code B.

Nous venons d'exposer les principes de l'utilisation de deux codes pour gérer un ensemble de cas complexes et différents d'anonymat. Comme nous l'avons vu l'indépendance de ces deux codes permet une gestion sans faille des données anonymes pour peu que les participants - candidats ou certains intervenants ne puissent connaître le code B d'une ou plusieurs fiches en l'associant au code A. En l'absence de masquage du code B, l'utilisation d'un code B sous forme de code crypté est une solution qui crée, pour les codes à barres classiques un problème de fiabilité relative puisqu'il est possible de lire ces codes, après entraînement à leur codage, ou avec un stylo lecteur portatif pour les codes les plus complexes (entrelacés). C'est pourquoi il peut être opportun d'utiliser une série de codes supplémentaires pour rendre plus complexe toute levée de l'anonymat « pirate ».

Cette méthode peut être utilisée dans la gestion de deuxièmes codes B non masqués sous forme de codes à barres avec utilisation ou non de listes de résultats. Dans cette méthode, le deuxième code B non masqué, prenant la forme d'un code à barres (ou tout autre type) sur la fiche, est lu, enregistré dans un fichier et associé dans ce fichier à un code alphanumérique simple, puis sur le volet administration de la fiche d'anonymat, le ou les codes sont remplacés par une ou plusieurs étiquettes sur lesquelles un code alphanumérique simple, identique pour chaque fiche, est imprimé. Le système d'étiquette peut être remplacé par une impression de masquage du deuxième code B sur la fiche avec impression à côté du code alphanumérique simple associé informatiquement.

Ces opérations peuvent être réalisées automatiquement par un système d'indexation automatique des copies ou fiches décrit ci dessous en regard des figures 12 à 15. Comme nous l'avons vu dans les développements précédents, il peut être utile de disposer d'un système de codage simple pour gérer les données anonymes : copies et le ou les résultats qui leur sont associés. Pour autant, les deuxièmes codes B doivent être indéchiffrables avant séparation du volet auteur pour assurer un anonymat parfait. L'association d'un troisième code C complémentaire alphanumérique simple, à chaque deuxième code B crypté, est une solution élégante mais qui peut être exigeante en temps qualifié de manipulation et donc coûteuse. La présente invention propose une machine permettant d'attribuer un code complémentaire ou un index alphanumérique simple, à des fiches d'anonymat associées à des documents ou éléments matériels.

Les figures 12 et 13 illustrent une machine à indexer ou ré-indexer automatique. Ce type de machine est destiné à lire un code sur un document ou un élément matériel. La machine 1200 est composée :
- d'un module de lecture 1201, composé d'une tête de lecture infrarouge pour code barres standard ou d'un module de lecture ou caméra CCD pour tout autre type de lecture interprétée par ordinateur et par moteurs de lecture d'écriture manuscrite, imprimée, de codes barres standards ou à lecture par scanner de codes cryptés de cases à cocher et d'échelles graphiques,
- d'un module d'impression directe ou un pose étiquette 1303 pneumatique avec module d'impression des étiquettes 1202,
- d'un module de contrôle 1205, composé d'une tête dé lecture ou caméra CCD pour lecture interprétée par ordinateur et par moteurs de lecture d'écriture imprimée, de codes barres à lecture explicite (avec indication de leur valeur en police de caractères ASCII), et
- d'un tapis roulant compartimenté 1306 au format des copies 1305 qui entraîne celles-ci.

Le module de lecture 1201 effectue la lecture du deuxième code B. La lecture du code déclenche une gestion informatique par une liaison informatique 1203 avec un ordinateur 1204, gestion qui définit une association avec un code explicite ordonné (de la première copie à la dernière et dans l'ordre), ce code explicite est immédiatement imprimé, directement ou sur une étiquette collée à un endroit précis de la copie.

Le module de contrôle 1205 composé d'une tête de lecture ou caméra CCD pour lecture interprétée par ordinateur et par moteurs de lecture d'écriture imprimée, de codes barres à lecture explicite (avec indication de leur valeur en police de caractère ASCII) permet de contrôler la bonne impression du code explicite et sa conformité avec la série prédéfinie. Les copies indexées ou ré-indexées sont ensuite mises par lots ordonnés dans un réceptacle 1206.

Le code explicite peut être imprimé sur la fiche après impression du masquage du premier code ou sur une étiquette sécurisée indécollable afin d'interdire la connaissance du premier code. Dans ce cas, en variante, un premier code A est répété sur le volet administration, l'association avec un code complémentaire qui s'identifie au deuxième code B, l'association étant réalisée lors de la réindexation, par la machine des figures 12 à 14.

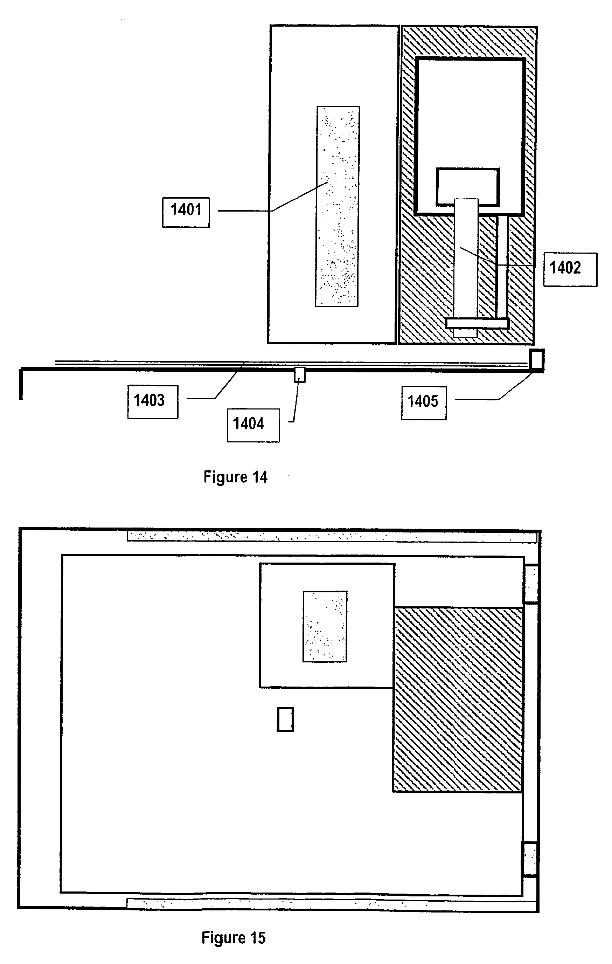

Dans une machine 1400 à indexer ou ré-indexer semi-automatique illustrée en figures 14 et 15, la copie 1403 est introduite manuellement et un contacteur 1404 déclenche un module de lecture 1401, composé d'une tête de lecture infrarouge pour code barres standard ou d'un module de lecture ou caméra CCD, pour tout autre type de lecture interprétée par ordinateur et par moteurs de lecture d'écriture manuscrite, imprimée, de codes barres standards ou à lecture par scanner, de codes cryptés illustrés en figures 10 et 11, de cases à cocher et d'échelles graphiques. Une gestion informatique par une liaison informatique avec un ordinateur définit une association entre le code lu et un code explicite ordonné. Sous l'effet d'une poussée, la copie 1403 rencontre, en fin de course, deux capteurs 1405, placés en série afin d'assurer un positionnement parfait des copies. Ces capteurs 1405 déclenchent l'impression du code complémentaire explicite, directement ou sur une étiquette collée, par un module d'impression 1402 et le positionnement du code complémentaire explicite à un endroit précis de la copie 1403. Dans cette version, le contrôle est effectué visuellement.

## Revendications

1. Procédé de traitement anonyme et informatisé d'un document ou d'un élément matériel, ci-après dénommés "élément matériel", dont l'auteur ou propriétaire, ci-après dénommés "auteur", doit rester inconnu durant le traitement de l'élément matériel (1775), ce procédé étant **caractérisé en ce qu'**il comporte :
• une étape (1716) d'association ou d'intégration à l'élément matériel d'un support d'information unique (300, 900), comportant :
■ un volet d'identification de l'auteur, appelé "volet auteur", portant un premier code prédéfini unique,
■ au moins un volet dit "volet administration" portant, chacun, un deuxième code prédéfini unique différent du premier code prédéfini,
ces volets formant un couple unique, les codes étant définis sans lien prédictible entre eux, préalablement à l'étape d'association ou d'intégration,
• une étape d'association durable d'une identification de l'auteur au volet auteur (1717) ;
• une étape de séparation du volet auteur et de l'élément matériel (1740), chaque volet administration restant attaché ou intégré à l'élément matériel ;
• une étape de traitement de l'élément matériel séparé du volet auteur (1775), pour fournir au moins un résultat de traitement de l'élément matériel ;
• une étape de lecture du volet auteur (1783) pour lire et associer le premier code à l'identification de l'auteur de l'élément matériel ;
• une étape de lecture d'au moins un volet administration (1784), pour lire et associer le deuxième code à au moins un résultat de traitement de l'élément matériel ;
• une étape de mise en correspondance par l'intermédiaire des codes, d'au moins un résultat de traitement avec l'identification de l'auteur de l'élément matériel permettant la levée de l'anonymat (1785) ;
au moins une des étapes de lecture comprenant une phase de lecture et de reconnaissance optoélectronique.

2. Procédé selon la revendication 1, **caractérisé en ce que** la relation entre le premier code et chaque deuxième code est générée par un algorithme informatique non prédictible qui met en oeuvre une variable aléatoire et **en ce que** la valeur de ladite variable et/ou une table de mise en correspondance des codes est mémorisée.

3. Procédé selon l'une quelconque des revendications 1 ou 2, **caractérisé en ce que** la relation entre le premier code et chaque deuxième code est générée par un algorithme informatique non prédictible qui met en oeuvre une variable représentative d'un type de contenu de l'élément matériel et **en ce que** la valeur de ladite variable et/ou une table de mise en correspondance des codes est mémorisée.

4. Procédé selon l'une quelconque des revendications 1 à 3, **caractérisé en ce qu'**au moins un volet administration constitue l'élément matériel.

5. Procédé selon l'une quelconque des revendications 1 à 4, **caractérisé en ce que**, au cours de l'étape de traitement, on traite des informations portées par l'auteur sur le volet administration et on fournit au moins un résultat sous forme d'au moins une valeur ou note.

6. Procédé selon l'une quelconque des revendications 1 à 5, **caractérisé en ce que** le support d'information unique comporte un talon d'identification comportant l'un des codes, ledit talon restant lié à l'élément matériel de manière durable.

7. Procédé selon l'une quelconque des revendications 1 à 6, **caractérisé en ce qu'**il comporte une étape d'inscription d'au moins un résultat de l'étape de traitement sur au moins un volet administration et une étape de séparation d'au moins un volet administration de l'élément matériel, avant l'étape de lecture dudit volet administration.

8. Procédé selon l'une quelconque des revendications 1 à 7, **caractérisé en ce qu'**il comporte une étape de lecture de l'identification de l'auteur conjointement à l'étape de lecture du volet auteur et de mémorisation de la correspondance entre le premier code et l'identification de l'auteur.

9. Procédé selon l'une quelconque des revendications 1 à 8, **caractérisé en ce qu'**il comporte une étape de masquage d'au moins un des codes au moins jusqu'à l'étape de séparation du volet auteur.

10. Procédé selon l'une quelconque des revendications 1 à 9, **caractérisé en ce qu'**il comporte une étape de masquage par un élément de masquage unique d'au moins un code au moins jusqu'à l'étape de séparation du volet auteur.

11. Procédé selon l'une quelconque des revendications 1 à 10, **caractérisé en ce qu'**il comporte une étape de lecture (1784) d'au moins un résultat du traitement conjointement à l'étape de lecture de chaque volet administration.

12. Procédé selon l'une quelconque des revendications 1 à 11, **caractérisé en ce que** le support d'information unique comporte plusieurs volets administration portant le même deuxième code unique et un code supplémentaire définissant le numéro du volet.

13. Procédé selon l'une quelconque des revendications 1 à 12, **caractérisé en ce que** au cours de l'étape d'association durable d'une identification de l'auteur au volet auteur, l'identification du participant est réalisée en écriture manuscrite ou par un code modifiable de manière manuscrite ou sous forme de pavé de cases à cocher à valeur alphanumérique.

14. Procédé selon l'une quelconque des revendications 1 à 13, **caractérisé en ce qu'**au moins l'un des codes est intégré dans une grille de valeurs alphanumériques comportant au moins un symbole alphanumérique par case, les éléments du code ayant une place prédéfinie dans la grille.

15. Procédé selon l'une quelconque des revendications 1 à 14, **caractérisé en ce qu'**au moins l'un des codes correspond à des signes graphiques intégrés dans une grille de signes graphiques dont les éléments correspondant au code ont une place prédéterminée dans la grille.

16. Procédé selon l'une quelconque des revendications 14 ou 15, **caractérisé en ce qu'**au moins une des cases qui ne correspond pas au code comporte un code complémentaire de contrôle de la valeur du code sous forme de valeurs alphanumériques ou de signes graphiques, **en ce que** chaque case qui comporte le code complémentaire est lue et **en ce que** le code est contrôlé en fonction du contenu desdites cases.

17. Procédé selon l'une quelconque des revendications 1 à 16, **caractérisé en ce qu'**il comprend un changement intermédiaire et complémentaire des codes comportant :
• une étape de lecture par procédé optoélectronique d'une identification et/ou d'un code non masqué associé à l'élément matériel identifié ;
• une étape d'enregistrement de l'identification et/ou du code dans un fichier informatique ;
• une étape de mise en correspondance de cette identification et/ou de ce code avec un code index explicite et séquentiel adapté pour être lu et interprété visuellement ;
• une étape d'impression de ce code index au cours de laquelle on masque l'identification et/ou le code précédemment lu sur l'élément matériel, en collant une étiquette par exemple ;
ces éléments matériels étant ainsi indexés de manière anonyme, l'identification et/ou le code lu et masqué et le code index correspondant étant associés dans un fichier mémorisé.

18. Procédé selon l'une quelconque des revendications 1 à 17, **caractérisé en ce qu'**au moins l'un des deuxièmes codes n'est pas masqué lors d'une étape de distribution aux auteurs des supports d'information uniques associés aux éléments matériels, et est réalisé sous forme de codes cryptés lisible par scanner ou pistolet lecteur codes à barres.

19. Procédé selon l'une quelconque des revendications 1 à 18, **caractérisé en ce qu'**au moins un résultat de l'étape de traitement est reporté sur au moins une liste comportant une série de codes représentatifs des deuxièmes codes, l'étape de mise en correspondance étant ensuite réalisée par lecture optoélectronique de ladite liste ou par saisie manuelle des résultats dans un fichier informatique comportant ladite liste.

20. Procédé selon l'une quelconque des revendications 1 à 19, **caractérisé en ce que** chaque deuxième code n'est pas masqué et est réalisé sous forme de codes cryptés, ou de codes grilles graphiques à lecture optoélectronique.

21. Procédé selon l'une quelconque des revendications 1 à 20, **caractérisé en ce que** chaque deuxième code est masqué lors d'une étape de distribution aux auteurs des supports d'information uniques associés aux éléments matériels; et est identique au premier code, le premier code étant réalisé sous forme de code crypté, ou sous forme de code correspondant à des signes graphiques intégrés dans une grille de signes graphiques dont les éléments correspondant au code ont une place prédéterminée dans la grille, ou sous forme de code intégré dans une grille de valeurs alphanumériques comportant au moins un symbole alphanumérique par case, les éléments du code ayant une place prédéfinie dans la grille.

22. Machine à ré-indexer des éléments matériels identifiés par codes, lesdits éléments matériels comportant i) un volet d'identification de l'auteur, appelé "volet auteur", portant un premier code prédéfini unique, et ii) au moins un volet dit "volet administration" portant, chacun, un deuxième code prédéfini unique différent du premier code prédéfini, ladite machine étant adaptée à être mise en oeuvre dans l'exécution du procédé selon l'une quelconque des revendications 1 à 21, la machine comprenant:
• un dispositif de lecture par procédé optoélectronique d'une identification manuscrite ou d'un code, porté sur le volet auteur de l'élément matériel ou du support d'information unique ;
• un dispositif informatique d'enregistrement de l'identification manuscrite ou du code lu dans un fichier numérique et qui lui associe dans ledit fichier numérique un code index explicite et séquentiel sans lien prédictible avec ladite identification manuscrite ou avec ledit code lu,
• un dispositif d'impression de ce code index sur le volet administration ;
• un système de masquage de l'identification manuscrite ou du code lu sur le volet auteur de chaque élément matériel.

23. Fiche pour traitement anonyme d'un élément matériel, **caractérisée en ce qu'**elle comporte :
• un volet auteur associé à un premier code et adapté pour recevoir une identification de l'auteur de l'élément matériel ;
• au moins un deuxième volet administration associé à un deuxième code différent du premier code ;
ces volets étant liés pour former un couple unique, les codes étant différents et se correspondant pour chaque fiche de manière non prédictible, la fiche étant adaptée pour être solidarisée à l'élément matériel, le volet auteur étant prévu pour être détaché du volet administration, le volet administration restant associé à l'élément matériel ; et
• un masque adapté à masquer au moins un code.

24. Fiche selon la revendication 23, **caractérisée en ce qu'**elle comporte, en outre, un talon portant un des premiers et ou deuxièmes codes, ledit talon étant associé de manière durable à l'élément matériel.

25. Fiche selon l'une quelconque des revendications 23 ou 24, **caractérisée en ce qu'**elle comporte au moins un volet administration associés au deuxième code et/ou à un code complémentaire représentatif du deuxième code, le code complémentaire pouvant être différent pour chaque volet administration.

26. Fiche selon l'une quelconque des revendications 23 à 25, **caractérisée en ce qu'**au moins un volet administration est adaptée pour recevoir au moins un résultat de traitement de l'élément matériel, sous forme d'au moins une valeur ou note.

27. Fiche selon l'une quelconque des revendications 23 à 26, **caractérisée en ce qu'**au moins un volet administration est adapté pour être directement renseigné par l'auteur : par exemple, un questionnaire, un questionnaire à choix multiples.

28. Fiche selon l'une quelconque des revendications 23 à 26, **caractérisée en ce que** le masque apte à masquer au moins un code est une étiquette de masquage opaque, comportant une pré-découpe d'une zone intérieure qui, lors de la séparation des volets se détache et laisse apparaître au moins un code préalablement imprimé sur au moins l'un des volets.

## Claims

1. Process for anonymous and computerized processing of a document or a physical element, hereinafter called "physical element", whose author or proprietor, hereafter called "author", must remain unknown during processing of the physical element (1775), this processing being **characterized in that** it comprises:
• a step (1716) of association or integration with the physical element of a unique information support (300, 900), comprising:
■ an identification section for the author called author section bearing a first predetermined unique code,
■ at least one so-called "administrative" section each bearing a second predetermined unique code identical to or different from the first predetermined code,
these sections forming a unique couple, the codes being defined without predictable relationship before the step of association or integration,
• a step of permanent association of an identification of the author with the author section (1717);
• a step of separation of the author section from the physical element (1740), each administrative section remaining attached to or integral with the physical element;
• a step of processing the material element separated from the author section (1775), to provide at least one result of processing the physical element;
• a step of reading the author section (1783) to read and associate the first code with the identification of the author of the physical element;
• a step of reading at least one administration section (1784), to read and associate the second code with at least a result of processing of the physical element;
• a step of placing in correspondence by means of codes, at least one result of processing with the identification of the author of the physical element, permitting ending anonymity (1785);
at least one of the reading steps comprising a phase of optoelectronic reading and recognition.

2. Process according to claim 1, **characterized in that** the relationship between the first code and each second code is generated by an unpredictable computer algorithm which is a random variable and **in that** the value of said variable and/or a table of correspondence of codes is memorized.

3. Process according to any one of claims 1 or 2, **characterized in that** the relationship between the first code and each second code is generated by an unpredictable computer algorithm which uses a variable representative of a type of content of the physical element and **in that** the value of said variable and/or a table of correspondence of the codes is memorized.

4. Process according to any one of claims 1 to 3, **characterized in that** at least one administration section constitutes the physical element.

5. Process according to any one of claims 1 to 4, **characterized in that**, in the course of the processing step, the information carried by the author on the administration section is processed and there is furnished at least one result in the form of at least one value or grade.

6. Process according to any one of claims 1 to 5, **characterized in that** the unique information support comprises an identification stub comprising one of the codes, said stub remaining connected to the physical element of durable material.

7. Process according to any one of claims 1 to 6, **characterized in that** it comprises a step of inscription of at least one result of the processing step on at least one administration section and one step of separation of at least one administration section from the physical element, before the step of reading said administrative section.

8. Process according to any one of claims 1 to 7, **characterized in that** it comprises a step of reading the identification of the author conjointly with the step of reading the author section and memorizing the correspondence between the first code and the identification of the author.

9. Process according to any one of claims 1 to 8, **characterized in that** it comprises a step of masking at least one of the codes at least until the step of separation of the author section.

10. Process according to any one of claims 1 to 9, **characterized in that** it comprises a step of masking by a unique masking element of at least one code at least until the step of separation of the author section.

11. Process according to any one of claims 1 to 10, **characterized in that** it comprises a step of reading (1784) at least one result of processing conjointly with the step of reading each administration section.

12. Process according to any one of claims 1 to 11, **characterized in that** the unique information support comprises several administration sections bearing the same unique second code and a supplemental code defining the number of the section.

13. Process according to any one of claims 1 to 12, **characterized in that** in the course of the step of permanent association of an identification of the author to the author section, the identification of the participant is carried out by handwriting or by a modifiable code in a handwritten manner or in the form of a group of boxes to be checked with alphanumeric value.

14. Process according to any one of claims 1 to 13, **characterized in that** at least one of the codes is integrated into a grid of alphanumeric values comprising at least one alphanumeric symbol per box, the elements of the code having a predetermined place in the grid.

15. Process according to any one of claims 1 to 14, **characterized in that** at least one of the codes corresponds to graphical symbols integrated into a grid of graphical symbols whose elements corresponding to the code have a predetermined place in the grid.

16. Process according to any one of claims 14 or 15, **characterized in that** at least one of the boxes which does not correspond to the code comprises a supplemental code for monitoring the value of the code in the form of alphanumeric values or graphic signs, **in that** each box which comprises the supplemental code is read and **in that** the code is monitored as a function of the content of said boxes.

17. Process according to any one of claims 1 to 16, **characterized in that** it comprises an intermediate and supplemental changing of the codes comprising:
• a step of reading by optoelectronic process of an identification and/or of an unmasked code associated with the identified physical element;
• a step of recording the identification and/or the code in a computer file;
• a step of placing in correspondence this identification and/or this code with an explicit and sequential index code adapted to be read and interpreted visually;
• a step of printing of this index code in the course of which the identification and/or the previously read code on the physical element is masked, by gluing a label for example;
the physical elements being thus indexed in an anonymous manner, the identification and/or the code read and masked and the corresponding index code being associated in a memorized file.

18. Process according to any one of claims 1 to 17, **characterized in that** at least one of the second codes is not masked during a step of distribution to the authors of the unique information supports associated with the physical elements, and is in the form of encrypted codes readable by scanner or by a barcode reading wand.

19. Process according to any one of claims 1 to 18, **characterized in that** at least one result of the step of processing is reported on at least one list comprising a series of codes representative of second codes, the step of placing in correspondence being then carried out by optoelectronic reading of said list or by manual acquisition of the results in a computer file comprising said list.

20. Process according to any one of claims 1 to 19, **characterized in that** each second code is not masked and is in the form of encrypted codes, or of graphic grill codes with optoelectronic reading.

21. Process according to any one of claims 1 to 20, **characterized in that** each second code is masked during a step of distribution to the authors of the unique information supports associated with the physical elements, and is identical to the first code, the first code being in the form of encrypted code, or in the form of code corresponding to graphic signs integrated into a grid of graphic signs whose elements corresponding to the code have a predetermined place in the grid, or in the form of a code integrated into the grid of alphanumeric values comprising at least one alphanumeric symbol per box, the elements of the code having a predetermined place in the grid.

22. Machine to re-index physical elements identified by codes, said physical elements comprising i) an identification section for the author called author section, bearing a first predetermined unique code, and ii) at least one so-called "administrative" section each bearing a second predetermined unique code different from the first predetermined code, said machine being adapted to be used to carry out, the process according to any one of claims 1 to 21, the machine comprising:
• a reading device by optoelectronic process of a written identification or of a code, carried by the physical element or on the unique information support;
• a computer device for recordation of the handwritten identification or of the code read in a digital file and which associates in said digital file an explicit and sequential index code, having no predictable relationship with said handwritten identification or said read code, adapted to be read and interpreted visually;
• a device for printing this index code on the administrative section;
• a system for masking the handwritten identification or the code read on the author section of each physical element,

23. Form for anonymous processing of a physical element, **characterized in that** it comprises:
• an author section associated with a first code and adapted to receive an identification of the author of the physical element;
• at least one second administrative section associated with a second code different from the first code;
these sections being connected to form a unique couple, the codes being different and corresponding for each form in an unpredictable manner, the form being adapted to be secured to the physical element, the author section being provided to be detached from the administrative section, the administration section remaining associated with the physical element; and
• a mask adapted to mask at least one code.

24. Form according to claim 23, **characterized in that** it comprises moreover a stub carrying one of the first and/or second codes, said stub being associated permanently with the physical element.

25. Form according to any one of claims 23 or 24, **characterized in that** it comprises at least one administrative section associated with the second code and/or with a complementary code representative of the second code, the complementary code being adapted to be different for each administrative section.

26. Form according to any one of claims 23 to 25, **characterized in that** at least one administrative section is adapted to receive at least one result of processing of the physical element, in the form of at least one value or grade.

27. Form according to any one of claims 23 to 26, **characterized in that** at least one administrative section is adapted to be directly filled in by the author: for example, a questionnaire, a multiple choice questionnaire.

28. Form according to any one of claims 23 to 26, **characterized in that** the mask adapted to mask at least one code is an opaque masking tag, comprising a pre-cutout of an internal zone which during separation of the sections is detached and leaves visible at least one code previously imprinted on at least one of the sections.

## Patentansprüche

1. Verfahren zur anonymen und elektronischen Bearbeitung eines Schriftstücks oder eines materiellen Elements, nachstehend als "materielles Element" bezeichnet, dessen Urheber oder Eigentümer, nachstehend als "Urheber" bezeichnet, bei der Bearbeitung des materiellen Elements (1775) unerkannt bleiben soll, wobei das Verfahren **dadurch gekennzeichnet ist, dass** es Folgendes aufweist:
• einen Schritt (1716), in welchem ein einzigartiger Informationsträger (300, 900) dem materiellen Element zugeordnet oder in dieses eingearbeitet wird, wobei der Träger Folgendes aufweist:
■ einen Bereich zur Identifizierung des Urhebers, der als "Urheberbereich" bezeichnet wird und mit einem ersten, zuvor festgelegten, einzigartigen Code versehen ist,
■ mindestens einen.Bereich, der als "Verwaltungsbereich" bezeichnet wird, wobei jeder davon mit einem zweiten, zuvor festgelegten, einzigartigen Code versehen ist, der sich vom ersten zuvor festgelegten Code unterscheidet,
wobei diese Bereiche ein einzigartiges Paar bilden, wobei vor dem Schritt der Zuordnung oder der Einarbeitung zwischen den zuvor festgelegten Codes keinerlei vorhersagbare Verbindung besteht,
• einen Schritt (1717), in welchem dem Urheberbereich eine Identifizierung des Urhebers dauerhaft zugeordnet wird;
• einen Schritt (1740), in welchem der Urheberbereich und das materielle Element getrennt werden, wobei jeder der Verwaltungsbereiche mit dem materiellen Element verbunden oder in dieses eingearbeitet bleibt;
• einen Schritt (1775), in welchem das materielle Element, das vom Urheberbereich getrennt wurde, derart bearbeitet wird, dass mindestens ein Ergebnis der Bearbeitung des materiellen Elements bereitgestellt wird;
• einen Schritt (1783), in welchem der Urheberbereich gelesen wird, um den ersten Code zu lesen und der Identifizierung des Urhebers des materiellen Elements zuzuordnen;
• einen Schritt (1784), in welchem mindestens ein Verwaltungsbereich gelesen wird, um den zweiten Code zu lesen und dem mindestens einen Ergebnis der Bearbeitung des materiellen Elements zuzuordnen;
• einen Schritt (1785), in welchem mindestens ein Bearbeitungsergebnis mittels der Codes mit der Identifizierung des Urhebers des materiellen Elements in Beziehung gebracht wird, wodurch ein Aufheben des Anonymats ermöglicht wird;
wobei mindestens einer der Leseschritte eine Phase des Lesens und der optoelektronischen Erkennung umfasst.

2. Verfahren nach Anspruch 1, **dadurch gekennzeichnet, dass** die Beziehung zwischen dem ersten Code und jedem der zweiten Codes durch einen nicht vorhersagbaren Computeralgorithmus erzeugt wird, der eine zufällige Variable zum Einsatz bringt, und dass der Wert dieser Variable und/oder eine Tabelle zur Herstellung einer Beziehung zwischen den Codes gespeichert wird.

3. Verfahren nach einem beliebigen der Ansprüche 1 oder 2, **dadurch gekennzeichnet, dass** die Beziehung zwischen dem ersten Code und jedem der zweiten Codes durch einen nicht vorhersagbaren Computeralgorithmus erzeugt wird, der eine Variable zum Einsatz bringt, welche für eine Art des Inhalts des materiellen Elements steht, und dass der Wert dieser Variable und/oder eine Tabelle zur Herstellung einer Beziehung zwischen den Codes gespeichert wird.

4. Verfahren nach einem beliebigen der Ansprüche 1 bis 3, **dadurch gekennzeichnet, dass** mindestens ein Verwaltungsbereich das materielle Element darstellt.

5. Verfahren nach einem beliebigen der Ansprüche 1 bis 4, **dadurch gekennzeichnet, dass** im Laufe des Bearbeitungsschritts Informationen bearbeitet werden, die der Urheber im Verwaltungsbereich angegeben hat, und mindestens ein Ergebnis in Form mindestens eines Werts oder einer Note bereitgestellt wird.

6. Verfahren nach einem beliebigen der Ansprüche 1 bis 5, **dadurch gekennzeichnet, dass** der einzigartige Informationsträger einen Identifizierungsabschnitt aufweist, der einen der Codes aufweist, wobei der Abschnitt dauerhaft mit dem materiellen Element verbunden bleibt.

7. Verfahren nach einem beliebigen der Ansprüche 1 bis 6, **dadurch gekennzeichnet, dass** es einen Schritt aufweist, in welchem mindestens ein Ergebnis des Bearbeitungsschritts in mindestens einen Verwaltungsbereich eingetragen wird, und einen Schritt, in welchem mindestens ein Verwaltungsbereich vom materiellen Element getrennt wird, vor dem Schritt des Lesens dieses Verwaltungsbereichs.

8. Verfahren nach einem beliebigen der Ansprüche 1 bis 7, **dadurch gekennzeichnet, dass** es, gemeinsam mit dem Schritt, in welchem der Urheberbereich gelesen und die Beziehung zwischen dem ersten Code und der Identifizierung des Urhebers gespeichert wird, einen Schritt aufweist, in welchem die Identifizierung des Urhebers gelesen wird.

9. Verfahren nach einem beliebigen der Ansprüche 1 bis 8, **dadurch gekennzeichnet, dass** es einen Schritt aufweist, in welchem mindestens einer der Codes mindestens bis zum Schritt des Abtrennens des Urheberbereichs maskiert wird.

10. Verfahren nach einem beliebigen der Ansprüche 1 bis 9, **dadurch gekennzeichnet, dass** es einen Schritt aufweist, in welchem mindestens ein Code mindestens bis zum Schritt des Abtrennens des Urheberbereichs durch ein einzigartiges Maskierungselement maskiert wird.

11. Verfahren nach einem beliebigen der Ansprüche 1 bis 10, **dadurch gekennzeichnet, dass** es, gemeinsam mit dem Schritt des Lesens jedes der Verwaltungsbereiche, einen Schritt (1784) aufweist, in welchem mindestens ein Ergebnis des Bearbeitungsschritts gelesen wird.

12. Verfahren nach einem beliebigen der Ansprüche 1 bis 11, **dadurch gekennzeichnet, dass** der einzigartige Informationsträger mehrere Verwaltungsbereiche aufweist, die mit demselben einzigartigen zweiten Code und mit einem zusätzlichen Code, welcher die Nummer des Bereichs festlegt, versehen sind.

13. Verfahren nach einem beliebigen der Ansprüche 1 bis 12, **dadurch gekennzeichnet, dass** im Laufe des Schritts, in welchem eine Identifizierung des Urhebers dauerhaft dem Urheberbereich zugeordnet wird, die Identifizierung des Teilnehmers handschriftlich erfolgt oder mittels eines Codes, der handschriftlich oder in Form eines Blocks mit Feldern, die mit alphanumerischen Werten auszufüllen sind, modifiziert werden kann.

14. Verfahren nach einem beliebigen der Ansprüche 1 bis 13, **dadurch gekennzeichnet, dass** mindestens einer der Codes in ein Raster mit alphanumerischen Werten eingefügt wird, welches mindestens ein alphanumerisches Zeichen pro Feld aufweist, wobei die Elemente des Codes einen zuvor festgelegten Platz in dem Raster haben.

15. Verfahren nach einem beliebigen der Ansprüche 1 bis 14, **dadurch gekennzeichnet, dass** mindestens einer der Codes graphischen Zeichen entspricht, die in ein Raster von graphischen Zeichen eingefügt werden, wobei dessen Elemente, sofern sie dem Code entsprechen, einen zuvor festgelegten Platz in dem Raster haben.

16. Verfahren nach einem beliebigen der Ansprüche 14 oder 15, **dadurch gekennzeichnet, dass** mindestens eines der Felder, das nicht dem Code entspricht, einen ergänzenden Code in Form von alphanumerischen Werten oder graphischen Zeichen zur Überprüfung des Wertes des Codes aufweist, und dass jedes Feld, das den ergänzenden Code aufweist, gelesen wird, und dass der Code in Abhängigkeit vom Inhalt dieser Felder überprüft wird.

17. Verfahren nach einem beliebigen der Ansprüche 1 bis 16, **dadurch gekennzeichnet, dass** es als Zwischenschritt eine ergänzende Änderung der Codes umfasst, die Folgendes aufweist:
• einen Schritt, in welchem eine Identifizierung und/oder ein nicht maskierter Code, der einem identifizierten materiellen Element zugeordnet ist, durch ein optoelektronisches Verfahren gelesen wird;
• einen Schritt, in welchem die Identifizierung und/oder der Code in einer elektronischen Datei gespeichert wird;
• einen Schritt, in welchem diese Identifizierung und/oder dieser Code mit einem eindeutigen und sequentiellen Indexcode, der dazu geeignet ist, gelesen und visuell interpretiert zu werden, in Beziehung gebracht wird;
• einen Schritt, in welchem dieser Indexcode gedruckt wird, wobei die Identifizierung und/oder der Code, der zuvor auf dem materiellen Element abgelesen wurde, beispielsweise durch Aufkleben eines Etiketts maskiert wird;
wobei die materiellen Elemente somit auf anonyme Art und Weise mit einem Index versehen wurden, da die Identifizierung und/oder der Code gelesen und maskiert wurde und der entsprechende Indexcode in einer gespeicherten Datei zugeordnet wurde.

18. Verfahren nach einem beliebigen der Ansprüche 1 bis 17, **dadurch gekennzeichnet, dass**, während eines Schritts, in welchem die einzigartigen Informationsträger, die den materiellen Elementen zugeordnet sind, an die Urheber ausgegeben werden, mindestens einer des zweiten Codes nicht maskiert ist und in Form von verschlüsselten Codes, die mit einem Scanner oder einem Strichcode-Lesegeräte lesbar sind, ausgeführt ist.

19. Verfahren nach einem beliebigen der Ansprüche 1 bis 18, **dadurch gekennzeichnet, dass** mindestens ein Ergebnis des Bearbeitungsschritts in mindestens eine Liste übertragen wird, die eine Reihe von Codes aufweist, die für die zweiten Codes stehen, wobei der Schritt des Herstellens einer Beziehung anschließend durchgeführt wird, indem diese Liste optoelektronisch gelesen wird oder indem die Ergebnisse manuell in eine elektronische Datei eingegeben werden, die diese Liste aufweist.

20. Verfahren nach einem beliebigen der Ansprüche 1 bis 19, **dadurch gekennzeichnet, dass** keiner der zweiten Codes maskiert ist und diese in Form von verschlüsselten Codes oder von graphischen, optoelektronisch lesbaren Rastercodes ausgeführt sind.

21. Verfahren nach einem beliebigen der Ansprüche 1 bis 20, **dadurch gekennzeichnet, dass**, während eines Schritts, in welchem die einzigartigen Informationsträger, die den materiellen Elementen zugeordnet sind, an die Urheber ausgegeben werden, jeder der zweiten Codes maskiert und mit dem ersten Code identisch ist, wobei der erste Code in Form eines verschlüsselten Codes ausgeführt ist oder in Form eines Codes, der graphischen Zeichen entspricht, welche in ein Raster von graphischen Zeichen eingefügt werden, wobei dessen Elemente, sofern sie dem Code entsprechen, einen zuvor festgelegten Platz im Raster haben, oder in Form eines Codes, der in ein Raster mit alphanumerischen Werten eingefügt wird, welches mindestens ein alphanumerisches Zeichen pro Feld aufweist, wobei die Elemente des Codes einen zuvor festgelegten Platz in dem Raster haben.

22. Maschine, die dazu bestimmt ist, materielle Elemente, welche durch Codes identifiziert sind, mit neuen Indices zu versehen, wobei die materiellen Elemente i) einen Bereich zur Identifizierung des Urhebers, der als "Urheberbereich" bezeichnet wird und mit einem ersten, zuvor festgelegten, einzigartigen Code versehen ist, und ii) mindestens einen Bereich, der als "Verwaltungsbereich" bezeichnet wird und von denen jeder mit einem zweiten, zuvor festgelegten, einzigartigen Code versehen ist, welcher sich von dem ersten zuvor festgelegten Code unterscheidet, aufweisen, wobei die Maschine dazu geeignet ist, bei der Ausführung eines Verfahrens nach einem beliebigen der Ansprüche 1 bis 21 eingesetzt zu werden, wobei die Maschine Folgendes umfasst:
• eine Vorrichtung zum Lesen, mittels eines optoelektronischen Verfahrens, einer handschriftlichen Identifizierung oder eines Codes, der im Urheberbereich des materiellen Elements oder des einzigartigen Informationsträgers angegeben ist;
• eine elektronische Vorrichtung zum Speichern der handschriftlichen Information oder des gelesenen Codes in einer digitalen Datei, wobei die Vorrichtung dieser/diesem in der digitalen Datei einen eindeutigen und sequenziellen Indexcode zuordnet, der keine vorhersagbare Verbindung mit der handschriftlichen Information oder mit dem gelesenen Code hat,
• eine Vorrichtung zum Drucken dieses Indexcodes auf den Urheberabschnitt;
• ein System zum Maskieren der handschriftlichen Identifizierung oder des gelesenen Codes im Urheberbereich jedes der materiellen Elemente.

23. Datenblatt zur anonymen Bearbeitung eines materiellen Elements, **dadurch gekennzeichnet, dass** es Folgendes aufweist:
• einen Urheberbereich, der einem ersten Code zugeordnet ist und dazu geeignet ist, eine Identifizierung des Urhebers des materiellen Elements zu empfangen;
• mindestens einen zweiten Verwaltungsbereich, der einem zweiten Code zugeordnet ist, welcher sich vom ersten Code unterscheidet;
wobei diese Bereich verbunden sind, um ein einzigartiges Paar zu bilden, wobei die Codes unterschiedlich sind und für jedes Datenblatt eine nicht vorhersagbare Entsprechung aufweisen, wobei das Datenblatt dazu geeignet ist, fest mit dem materiellen Element verbunden zu werden, wobei der Urheberbereich dafür vorgesehen ist, vom Verwaltungsbereich abgetrennt zu werden, wobei der Verwaltungsbereich dem materiellen Element zugeordnet bleibt; und
• eine Maskierung, die dazu geeignet ist, mindestens einen Code zu maskieren.

24. Datenblatt nach Anspruch 23, **dadurch gekennzeichnet, dass** es weiterhin einen Abschnitt aufweist, der erste und oder zweite Codes aufweist, wobei der Abschnitt dem materiellen Element dauerhaft zugeordnet ist.

25. Datenblatt nach einem beliebigen der Ansprüche 23 oder 24, **dadurch gekennzeichnet, dass** es mindestens einen Verwaltungsbereich aufweist, der dem zweiten Code und/oder einem ergänzenden Code, welcher für den zweiten Code steht, zugeordnet ist, wobei der ergänzende Code für jeden Verwaltungsbereich unterschiedlich sein kann.

26. Datenblatt nach einem beliebigen der Ansprüche 23 bis 25, **dadurch gekennzeichnet, dass** mindestens ein Verwaltungsbereich dazu geeignet ist, mindestens ein Ergebnis der Bearbeitung des materiellen Elements in Form mindestens eines Wertes oder einer Note zu empfangen.

27. Datenblatt nach einem beliebigen der Ansprüche 23 bis 26, **dadurch gekennzeichnet, dass** mindestens ein Verwaltungsbereich dazu geeignet ist, direkt vom Urheber ausgefüllt zu werden: beispielweise ein Fragebogen, ein Mehrfachauswahl-Fragebogen.

28. Datenblatt nach einem beliebigen der Ansprüche 23 bis 26, **dadurch gekennzeichnet, dass** es sich bei der Maskierung, die dazu geeignet ist, mindestens einen Code zu maskieren, um ein undurchsichtiges Maskierungsetikett handelt, das eine vorgeschnittene innere Zone aufweist, die sich bei der Trennung der Bereiche ablöst und mindestens einen Code, der zuvor auf mindestens einen der Bereiche gedruckt wurde, erscheinen lässt.
